# EUROPEAN PATENT APPLICATION

(11) **EP 4 753 274 A1**
(43) Date of publication of application: **03.06.2026**
(21) Application number: 24895766.4
(22) Date of filing: 15.08.2024
(51) Int. Cl.: H04N 23/60

(54) **PHOTOGRAPHING PARAMETER SETTING METHOD, AND ELECTRONIC DEVICE**

(30) Priority: 30.11.2023 CN 202311626683
(71) Applicant: Honor Device Co., Ltd., Shenzhen, Guangdong 518040 (CN)
(72) Inventor: DU, Yawen, Shenzhen, Guangdong 518040 (CN)
(74) Representative: Isarpatent
(86) International application number: PCT/CN2024/112485
(87) International publication number: WO 2025/112665

(57) **Abstract**

This application provides a photographing parameter setting method and an electronic device. The method includes: The electronic device extends a frame length of a frame N, to have enough time to write configuration information of the frame N before performing image output on an (N+1)th frame. Therefore, a camera sensor may perform image output on the frame N+1 based on the written configuration information of the frame N. In this way, a frame loss caused by writing of incomplete configuration information is avoided.

## Description

This application claims priority to Chinese Patent Application No. 202311626683.7, filed with the China National Intellectual Property Administration on November 30, 2023 and entitled "PHOTOGRAPHING PARAMETER SETTING METHOD AND ELECTRONIC DEVICE", which is incorporated herein by reference in its entirety.

### TECHNICAL FIELD

This application relates to the field of terminal devices, and in particular, to a photographing parameter setting method and apparatus.

### BACKGROUND

With development of terminal technologies, terminal devices are applied to increasingly extensive scenarios. For example, a user may use a mobile phone to perform photographing, to meet a requirement of the user to record daily life with photos. In a photographing process, a terminal may automatically switch different image output modes based on a current environment scene, to meet a current environment requirement, thereby improving an image effect.

### SUMMARY

This application provides a photographing parameter setting method and an electronic device. In this method, the electronic device may delay an effective time sequence of image output mode configuration information, to avoid a frame loss caused by a long writing time of the image output mode configuration information.

According to a first aspect, this application provides a photographing parameter setting method. The method is applied to an electronic device, and the method includes: obtaining a first camera parameter of an (N-1)th frame at a first moment, where the first camera parameter includes a first frame length; obtaining second image output mode configuration information and a second camera parameter that are of an Nth frame at a second moment, where the second image output mode configuration information includes a configuration parameter corresponding to a second image output mode, the second camera parameter includes a second frame length, and the second frame length is less than the first frame length; writing the first camera parameter into a camera sensor at a third moment; performing, by the camera sensor, exposure and image output on the Nth frame based on the first camera parameter, where a frame length of the Nth frame is the first frame length, and an image output mode of the Nth frame is a first image output mode; writing the second image output mode configuration information and the second camera parameter into the camera sensor at a fourth moment; and performing, by the camera sensor, exposure and image output on an (N+1)th frame based on the second camera parameter and the second image output mode configuration information, where the fourth moment is within the Nth frame, a frame length of the (N+1)th frame is the second frame length, and an image output mode of the (N+1)th frame is the second image output mode. In this way, the electronic device extends the frame length of the frame N, to delay an effective time of image output mode configuration information, so that the electronic device has enough time to write the image output mode configuration information into the camera sensor. The effective time of the image output mode configuration information is an exposure moment of the frame N+1.

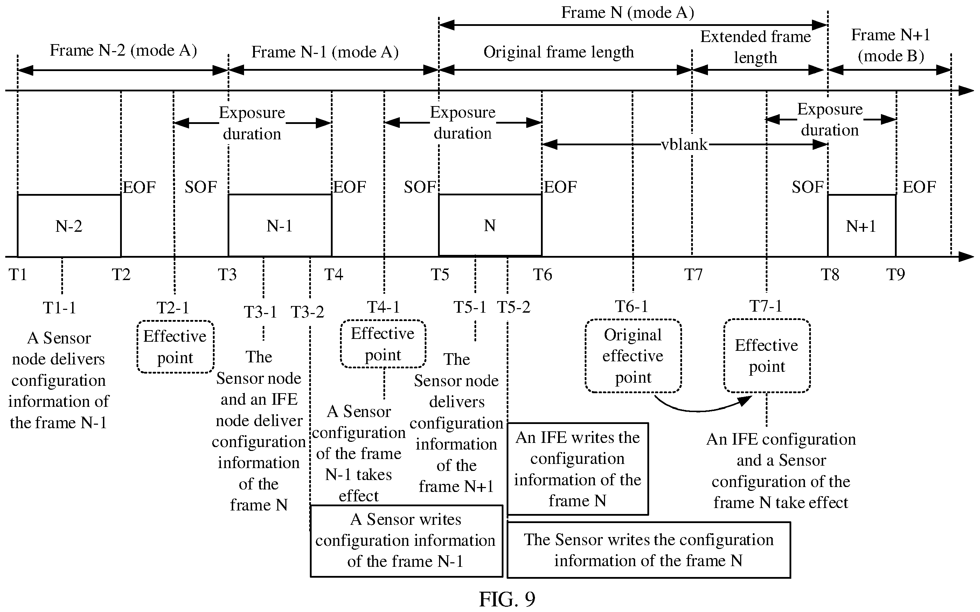

For example, the first moment is optionally a moment T1-1 in FIG. 9. To be specific, a Sensor node generates Sensor configuration information of the frame N-1, and the Sensor node delivers the Sensor configuration information of the frame N-1 to a CRM. The second moment is optionally a moment T3-1 in FIG. 9. To be specific, the Sensor node generates Sensor configuration information of the frame N, and the Sensor node delivers the Sensor configuration information of the frame N to the CRM. The third moment is optionally a moment T3-2 in FIG. 9. To be specific, the CRM delivers the Sensor configuration information of the frame N-1 to a Sensor driver, and the Sensor driver writes the Sensor configuration information of the frame N-1 into a register of a Sensor. The fourth moment is optionally a moment T5-2 in FIG. 9. To be specific, the CRM delivers the Sensor configuration information of the frame N to the Sensor driver, and the Sensor driver writes the configuration information of the frame N into the register of the Sensor.

In a possible implementation, duration between an image output mode effective point of the Nth frame and a start of frame delimiter SOF of the Nth frame is first duration, and duration between an image output mode effective point of the (N+1)th frame and an SOF of the (N+1)th frame is the first duration; and the performing, by the camera sensor, exposure and image output on an (N+1)th frame based on the second camera parameter and the second image output mode configuration information includes: obtaining, by the camera sensor, the second image output mode configuration information at the image output mode effective point of the (N+1)th frame; and performing, by the camera sensor, image output on the (N+1)th frame at the SOF of the (N+1)th frame. In this way, when a relative location of an effective point of each frame in each frame remains unchanged, the effective point of the frame N+1 may be delayed by extending the frame length of the frame N, so that the electronic device has enough time to write the image output mode configuration information into the camera sensor.

For example, a first effective point is optionally a moment T4-1 in FIG. 9. To be specific, the Sensor exposes the Nth frame based on the first frame length.

For example, a second effective point may be a moment T7-1 in FIG. 9. To be specific, the Sensor exposes the frame N+1 based on the Sensor configuration information of the frame N.

In a possible implementation, before the writing the first camera parameter into a camera sensor, the method further includes: obtaining IFE configuration information of the Nth frame at a fifth moment, where the IFE configuration information includes a preprocessing parameter corresponding to the second image output mode; and the writing the second image output mode configuration information and the second camera parameter into the camera sensor further includes: writing the IFE configuration information into an IFE. In this way, the IFE configuration information is synchronously written into the IFE, so that the IFE configuration information takes effect, to implement synchronization with the Sensor configuration information.

For example, the fifth moment is optionally a moment T3-1 in FIG. 9.

In a possible implementation, the method further includes: performing, by the IFE based on the IFE configuration information, image processing on the (N+1)th frame input by the camera sensor. In this way, the frame length of the frame N is delayed, to delay the effective time of the image output mode configuration information, so that the electronic device has enough time to write the image output mode configuration information into the camera sensor. Before exposing the frame N+1, the Sensor may obtain the complete Sensor configuration information of the frame N. The frame N+1 is exposed based on the Sensor configuration information of the frame N. The IFE configuration information is also written into the IFE in the frame N, and takes effect in the frame N+1. In this way, synchronization between the IFE configuration information and the Sensor configuration information takes effect, to avoid a frame loss caused by out-of-synchronization of the configuration information.

In a possible implementation, the first frame length is n times the second frame length, and n is greater than or greater than or equal to 1 and less than 2.

According to a second aspect, this application provides a photographing parameter setting method, applied to an electronic device. The method includes: obtaining second image output mode configuration information of an Nth frame and IFE configuration information of the Nth frame at a first moment, where the second image output mode configuration information includes effective configuration information and a configuration parameter corresponding to a second image output mode, and the IFE configuration information includes a preprocessing parameter corresponding to the second image output mode; performing image output on the Nth frame at a second moment, where an image output mode of the Nth frame is a first image output mode; writing the configuration parameter corresponding to the second image output mode into a camera sensor at a third moment, where the third moment is in the Nth frame; performing image output on an (N+1)th frame at a fourth moment, where an image output mode of the (N+1)th frame is the first image output mode; writing the effective configuration information into the camera sensor at a fifth moment within the (N+1)th frame, and writing the IFE configuration information into an IFE; and performing, by the camera sensor, image output
on an (N+2)th frame based on the second image output mode configuration information, where an image output mode of the (N+2)th frame is the second image output mode. In this way, the electronic device delays a configuration information effective time sequence of the frame N, so that the configuration information effective time sequence of the frame N takes effect in the frame N+2. In this way, before exposing the frame N+2, the electronic device has enough time to write the image output mode configuration information, to avoid a frame loss.

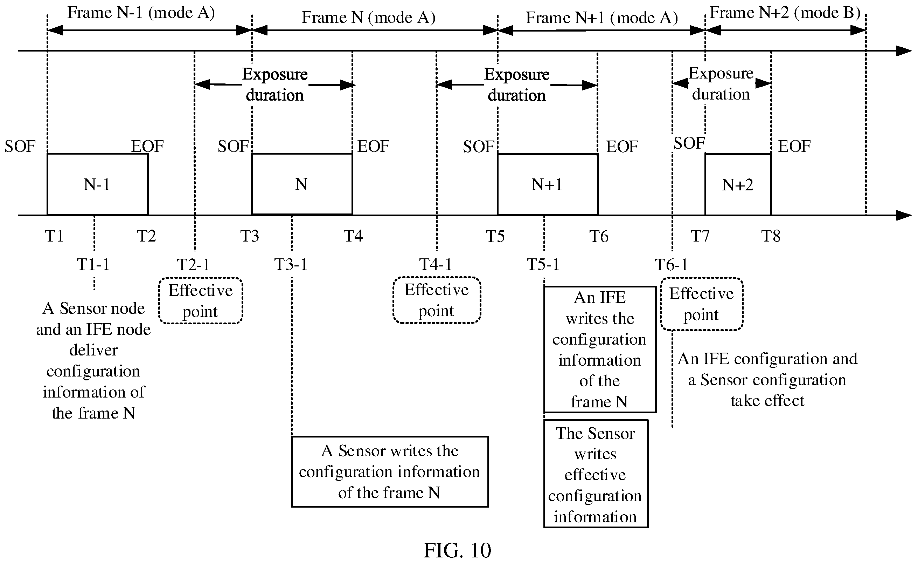

For example, the first moment is optionally a moment T1-1 in FIG. 10. The second moment is optionally a moment T2-1 in FIG. 10. The third moment is optionally a moment T3-1 in FIG. 10. The fourth moment is optionally a moment T4-1 in FIG. 10. The fifth moment is optionally a moment T5-1 in FIG. 10.

In a possible implementation, duration between an image output mode effective point of the (N+1)th frame and a start of frame delimiter SOF of the (N+1)th frame is first duration, and duration between an image output mode effective point of the (N+2)th frame and an SOF of the (N+2)th frame is the first duration; and the performing, by the camera sensor, image output on an (N+2)th frame based on the second image output mode configuration information includes: obtaining, by the camera sensor, the second image output mode configuration information at the image output mode effective point of the (N+2)th frame; and performing, by the camera sensor, image output on the (N+2)th frame at the SOF of the (N+2)th frame. In this way, in this application, an effective time sequence of a Sensor configuration of the electronic device is set to take effect in the frame N+2, so that the electronic device has enough time to write the image output mode configuration information into the camera sensor, to avoid a frame loss caused by out-of-synchronization between the IFE configuration information and the Sensor configuration information.

In a possible implementation, the fifth moment is before the image output mode effective point of the (N+2)th frame.

In a possible implementation, the IFE performs, based on the IFE configuration information, image processing on the (N+2)th frame input by the camera sensor.

According to a third aspect, this application provides an electronic device, including: one or more processors, a memory, and one or more computer programs. The one or more computer programs are stored in the memory, and when the computer programs are executed by the one or more processors, the electronic device is enabled to perform the following steps: obtaining a first camera parameter of an (N-1)th frame at a first moment, where the first camera parameter includes a first frame length; obtaining second image output mode configuration information and a second camera parameter that are of an Nth frame at a second moment, where the second image output mode configuration information includes a configuration parameter corresponding to a second image output mode, the second camera parameter includes a second frame length, and the second frame length is less than the first frame length; writing the first camera parameter into a camera sensor at a third moment; performing, by the camera sensor, exposure and image output on the Nth frame based on the first camera parameter, where a frame length of the Nth frame is the first frame length, and an image output mode of the Nth frame is a first image output mode; writing the second image output mode configuration information and the second camera parameter into the camera sensor at a fourth moment; and performing, by the camera sensor, exposure and image output on an (N+1)th frame based on the second camera parameter and the second image output mode configuration information, where the fourth moment is within the Nth frame, a frame length of the (N+1)th frame is the second frame length, and an image output mode of the (N+1)th frame is the second image output mode.

In a possible implementation, when the computer programs are executed by the one or more processors, the electronic device is enabled to perform the following steps: exposing, by the camera sensor, the Nth frame based on the first camera parameter at a first effective point; and exposing, by the camera sensor, the (N+1)th frame based on the second camera parameter and the second image output mode configuration information at a second effective point. Duration between the second effective point and a start of frame delimiter SOF of the (N+1)th frame is equal to duration between the first effective point and an SOF of the Nth frame.

In a possible implementation, when the computer programs are executed by the one or more processors, the electronic device is enabled to perform the following steps: obtaining IFE configuration information of the Nth frame at a fifth moment, where the IFE configuration information includes a preprocessing parameter corresponding to the second image output mode; and when the computer programs are executed by the one or more processors, the electronic device is enabled to perform the following step: writing the IFE configuration information into an IFE.

In a possible implementation, when the computer programs are executed by the one or more processors, the electronic device is enabled to perform the following step: performing, by the IFE based on the IFE configuration information, image processing on the (N+1)th frame input by the camera sensor.

In a possible implementation, the first frame length is n times the second frame length, and n is greater than or greater than or equal to 1 and less than 2

According to a fourth aspect, this application provides an electronic device, including: one or more processors, a memory, and one or more computer programs. The one or more computer programs are stored in the memory, and when the computer programs are executed by the one or more processors, the electronic device is enabled to perform the following steps: obtaining second image output mode configuration information of an Nth frame and IFE configuration information of the Nth frame at a first moment, where the second image output mode configuration information includes effective configuration information and a configuration parameter corresponding to a second image output mode, and the IFE configuration information includes a preprocessing parameter corresponding to the second image output mode; exposing the Nth frame at a second moment, where an image output mode of the Nth frame is a first image output mode; writing the configuration parameter corresponding to the second image output mode into a camera sensor at a third moment, where the third moment is in the Nth frame; exposing an (N+1)th frame at a fourth moment, where an image output mode of the (N+1)th frame is the first image output mode; writing the effective configuration information into the camera sensor at a fifth moment within the (N+1)th frame, and writing the IFE configuration information into an IFE; and performing, by the camera sensor, image output on an (N+2)th frame based on the second image output mode configuration information, where an image output mode of the (N+2)th frame is the second image output mode.

In a possible implementation, when the computer programs are executed by the one or more processors, the electronic device is enabled to perform the following steps: exposing, by the camera sensor, the (N+1)th frame at a first effective point; and exposing, by the camera sensor, the (N+2)th frame at a second effective point. Duration between the second effective point and a start of frame delimiter SOF of the (N+1)th frame is equal to duration between the first effective point and an SOF of the (N+2)th frame.

In a possible implementation, the fifth moment is before the second effective point.

In a possible implementation, when the computer programs are executed by the one or more processors, the electronic device is enabled to perform the following step: performing, by the IFE based on the IFE configuration information, image processing on the (N+2)th frame input by the camera sensor.

According to a fifth aspect, this application provides a computer-readable medium, configured to store a computer program. The computer program includes instructions for performing the method in the first aspect or any possible implementation of the first aspect.

According to a sixth aspect, this application provides a computer-readable medium, configured to store a computer program. The computer program includes instructions for performing the method in the second aspect or any possible implementation of the second aspect.

According to a seventh aspect, this application provides a computer program. The computer program includes instructions for performing the method in the first aspect or any possible implementation of the first aspect.

According to an eighth aspect, this application provides a computer program. The computer program includes instructions for performing the method in the second aspect or any possible implementation of the second aspect.

According to a ninth aspect, this application provides a chip. The chip includes a processing circuit and a transceiver pin. The transceiver pin and the processing circuit communicate with each other through an internal connection channel. The processing circuit performs the method in the first aspect or any possible implementation of the first aspect, to control a receive pin to receive a signal, and to control a transmit pin to send a signal.

According to a tenth aspect, this application provides a chip. The chip includes a processing circuit and a transceiver pin. The transceiver pin and the processing circuit communicate with each other through an internal connection channel. The processing circuit performs the method in the second aspect or any possible implementation of the second aspect, to control a receive pin to receive a signal, and to control a transmit pin to send a signal.

### BRIEF DESCRIPTION OF DRAWINGS

FIG. 1 is an example schematic diagram of a hardware structure of an electronic device;
FIG. 2A and FIG. 2B are an example schematic diagram of a camera module;
FIG. 3 is an example schematic diagram of a software structure of an electronic device;
FIG. 4 is an example schematic diagram of a user interface;
FIG. 5 is an example schematic diagram of module interaction;
FIG. 6A and FIG. 6B are example schematic diagrams of module interaction;
FIG. 7 is an example diagram of an image frame exposure time sequence;
FIG. 8 is an example diagram of an image frame exposure time sequence;
FIG. 9 is an example diagram of an image frame exposure time sequence;
FIG. 10 is an example diagram of an image frame exposure time sequence;
FIG. 11A and FIG. 11B are example schematic diagrams of module interaction;
FIG. 12 is an example diagram of an image frame exposure time sequence;
FIG. 13 is an example diagram of an image frame exposure time sequence;
FIG. 14 is an example diagram of an image frame exposure time sequence; and
FIG. 15 is an example schematic structural diagram of an apparatus.

### DESCRIPTION OF EMBODIMENTS

The technical solutions of the embodiments of this application are clearly and completely described below with reference to the accompanying drawings of the embodiments of this application. Clearly, the described embodiments are some rather than all of the embodiments of this application. All other embodiments obtained by persons of ordinary skill in the art based on the embodiments of this application without creative efforts shall fall within the protection scope of this application.

The term "and/or" in this specification is merely an association relationship of associated objects, and indicates that three relationships may exist. For example, A and/or B may indicate the following three cases: Only A exists, both A and B exist, and only B exists.

The terms "first" and "second" in the specification and claims of embodiments of this application are used to distinguish between different objects, but are not used to describe a specific sequence of objects. For example, a first target object and a second target object are used to distinguish between different target objects, but are not used to describe a specific sequence of the target objects.

In embodiments of this application, words such as "example" or "for example" are used to represent giving examples, illustrations, or descriptions. Any embodiment or design solution described as "example" or "for example" in embodiments of this application should not be construed as being more preferred or advantageous than other embodiments or design solutions. Specifically, the words such as "example" or "for example" are used to present related concepts in a specific manner.

In descriptions of embodiments of this application, unless otherwise stated, "a plurality of" means two or more. For example, a plurality of processing units mean two or more processing units, and a plurality of systems mean two or more systems.

For ease of understanding, technical terms in the embodiments of this application are first described.

A dynamic range (Dynamic Range) is a ratio of maximum luminance to minimum luminance in a video or image signal. The dynamic range is used in many fields to represent a ratio of a maximum value to a minimum value of a variable. In a digital image, the dynamic range represents a ratio between a maximum grayscale value and a minimum grayscale value in a range in which an image may be displayed. A dynamic range of the nature is quite large. Luminance of a night scene under the stars is approximately 0.001 cd/m2, and luminance of the sun is up to 1,000,000, 000 cd/m2. Such a dynamic range reaches an order of magnitude of 1,000,000,000/0.001=1013. However, in a real scene of the nature, the luminance of the sun and luminance of starlight are not obtained simultaneously. For a natural scene in the real world, the dynamic range is
a range of 10⁻³ to 10⁶. Currently, in most color digital images, channels R, G, and B each are stored by using 1 byte, namely, 8 bits. That is, a representation range of each channel is 0-255 grayscales. Herein, 0-255 is a dynamic range of an image. A dynamic range in a same scene in the real world is from 10-3 to 106, and therefore, is referred to as a high dynamic range (High Dynamic Range, HDR), and correspondingly, a dynamic range on a normal picture is a low dynamic range (Low Dynamic Range, LDR). An imaging process of a digital camera is actually mapping from a high dynamic range of the real world to a low dynamic range of a photo. Mapping from the high dynamic range to the low dynamic range of the photo in the real world is usually a non-linear process.

A gain is a process of amplifying or reducing an electrical signal or a digital signal obtained through photoelectric conversion. A larger gain indicates higher luminance of a captured image than an actual scene. A lower gain indicates lower luminance of a captured image than an actual scene.

Seamless (seamless) switching: Seamless switching is fast switching without stream stopping. In a process in which a camera outputs an image, software automatically switches different image output modes based on the current environment scene. This switching process is referred to as seamless switching. A delay cannot exist in a function switching process. If there is a delay, a user experiences lag.

Image output mode: In the embodiments of this application, a terminal may switch image output modes based on current environment information. A specific switching manner is described in detail in the following embodiments.

For example, the image output mode includes but is not limited to a Binning image output mode and an HDR image output mode. The Binning mode is a default image output mode of a camera sensor.

The HDR image output mode includes but is not limited to the following:
1. SHDR (stagger HDR, exposure-staggered HDR technology) mode: The camera sensor outputs two frames of images, first exposes one long exposure frame of image to focus on collecting dark information, and then exposes one frame of short exposure frame to focus on collecting luminant information. The two frames of images are simultaneously input into a chip platform image processing module, and after the two frames of images are processed based on a specific algorithm, one frame of image is generated.
2. DCG (dual conversion gain, dual conversion gain) mode: Each pixel of the camera sensor may separately control a gain. When the camera sensor operates in the DCG mode, exposure is performed only one time, but reading is performed at two times. At one time, an HCG (high conversion gain, namely, High CG) is used to capture dark information (which may also be referred to as low luminance information whose luminance is less than or less than or equal to a preset threshold), and at the other time, an LCG (low conversion gain, namely, low CG) is used to capture luminant information (which may also be referred to as high luminance information whose luminance is greater than or greater than or equal to a preset threshold). Two frames of images of the HCG and the LCG are simultaneously input into the chip platform image processing module, and after the two frames of images are processed based on a specific algorithm, one frame image is generated.
3. IDCG (intra dual conversion gain, intra dual conversion gain) mode: A difference between the IDCG mode and a DCG mode is as follows: In the DCG, a camera sensor simultaneously inputs two frames of images of an HCG and an LCG into a chip platform, and the chip platform fuses the two frames of images into one frame of image. In the IDCG mode, an HCG and an LCG are fused into one frame of image inside a camera sensor, and then input into a chip platform.
4. IDCG comb+VS (very short, very short) mode: VS is a special mode, and is a frame with a very short exposure time. In the IDCG and the VS, in a frame output manner of the SHDR, a long exposure frame (IDCG, namely, fusion of an HCG and an LCG) is exposed, and then, a short exposure frame (VS) is exposed. The short exposure frame is used to capture dark information. Two frames of images are simultaneously input into a chip platform image processing module, and after the two frames of images are processed based on a specific algorithm, one frame image is generated.

In the embodiments of this application, a terminal device may be a mobile terminal with a photographing function, for example, a mobile phone, a tablet computer, a wearable device, a vehicle-mounted device, an augmented reality (augmented reality, AR)/virtual reality (virtual reality, VR) device, a notebook computer, an ultra-mobile personal computer (ultra-mobile personal computer, UMPC), a netbook, or a personal digital assistant (personal digital assistant, PDA), or may be a professional photography device, for example, a digital camera, a single-lens reflex camera/mirrorless camera, a motion camera, a pan-tilt-zoom camera, or an unmanned aerial vehicle. A specific type of the terminal device is not limited in the embodiments of this application.

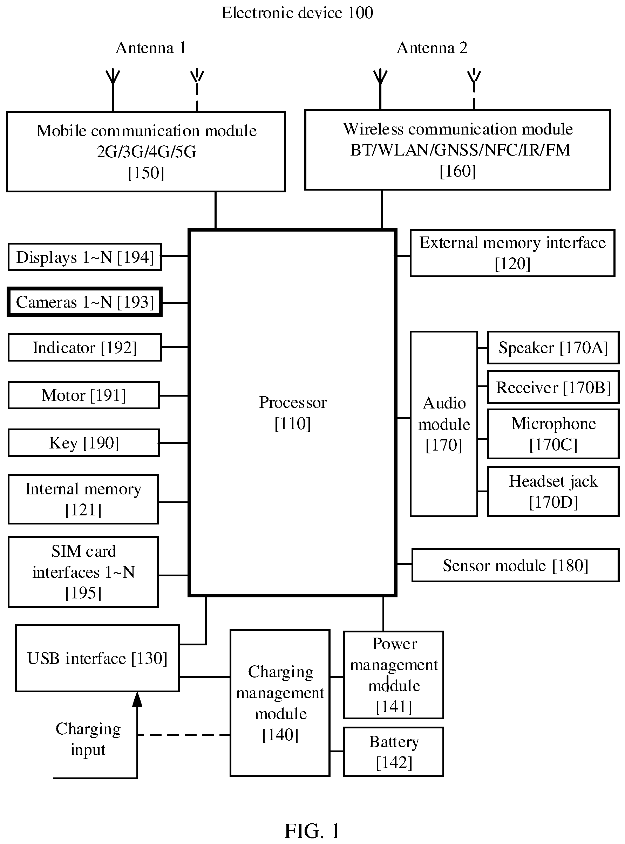

FIG. 1 is a schematic diagram of a structure of an electronic device 100. It should be understood that the electronic device 100 shown in FIG. 1 is merely an example of the electronic device, and the electronic device 100 may have more or fewer components than those shown in the figure, may combine two or more components, or may have different component configurations. The various components shown in FIG. 1 may be implemented in hardware that includes one or more signal processing and/or application-specific integrated circuits, software, or a combination of hardware and software.

The electronic device 100 may include a processor 110, an external memory interface 120, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a key 190, a motor 191, an indicator 192, a camera 193, a display 194, a subscriber identification module (subscriber identification module, SIM) card interface 195, and the like.

The processor 110 may include one or more processing units. For example, the processor 110 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, a neural-network processing unit (neural-network processing unit, NPU), and/or the like. Different processing units may be independent devices, or may be integrated into one or more processors.

The controller may be a nerve center and command center of the electronic device 100. The controller may generate an operation control signal based on instruction operation code and a timing signal, to complete control of instruction fetching and instruction execution.

A memory may be further disposed in the processor 110 to store instructions and data. In some embodiments, the memory in the processor 110 is a cache. The memory may store instructions or data recently used or cyclically used by the processor 110. If the processor 110 needs to use the instructions or the data again, the processor may directly invoke the instructions or the data from the memory. This avoids repeated access and reduces a waiting time of the processor 110, thereby improving system efficiency.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

The I2C interface is a bidirectional synchronous serial bus, including a serial data line (serial data line, SDA) and a serial clock line (serial clock line, SCL). In some embodiments, the processor 110 may include a plurality of groups of I2C buses. The processor 110 may be separately coupled to the touch sensor 180K, the charger, a flash, the camera 193, and the like through different I2C bus interfaces. For example, the processor 110 may be coupled to the touch sensor 180K through the I2C interface, so that the processor 110 communicates with the touch sensor 180K through the I2C bus interface, to implement a touch function of the electronic device 100.

The I2S interface may be used for audio communication. In some embodiments, the processor 110 may include a plurality of groups of I2S buses. The processor 110 may be coupled to the audio module 170 through the I2S bus, to implement communication between the processor 110 and the audio module 170. In some embodiments, the audio module 170 may transfer an audio signal to the wireless communication module 160 through the I2S interface, to implement a function of answering a call by using a Bluetooth headset.

The PCM interface may also be used for audio communication, to sample, quantize, and encode an analog signal. In some embodiments, the audio module 170 may be coupled to the wireless communication module 160 by using the PCM bus interface. In some embodiments, the audio module 170 may also transfer an audio signal to the wireless communication module 160 through the PCM interface, to implement the function of answering a call by using a Bluetooth headset. Both the I2S interface and the PCM interface may be used for audio communication.

The UART interface is a universal serial data bus, and is used for asynchronous communication. The bus may be a bidirectional communication bus, and converts to-be-transmitted data between serial communication and parallel communication. In some embodiments, the UART interface is usually configured to connect the processor 110 and the wireless communication module 160. For example, the processor 110 communicates with a Bluetooth module in the wireless communication module 160 through the UART interface, to implement a Bluetooth function. In some embodiments, the audio module 170 may transfer an audio signal to the wireless communication module 160 through the UART interface, to implement a function of playing music by using a Bluetooth headset.

The MIPI interface may be configured to connect the processor 110 to peripheral devices such as the display 194 and the camera 193. The MIPI interface includes a camera serial interface (camera serial interface, CSI), a display serial interface (display serial interface, DSI), and the like. In some embodiments, the processor 110 communicates with the camera 193 through the CSI interface, to implement a photographing function of the electronic device 100. The processor 110 communicates with the display 194 through the DSI interface, to implement a display function of the electronic device 100.

The GPIO interface may be configured by software. The GPIO interface may be configured as a control signal or may be configured as a data signal. In some embodiments, the GPIO interface may be configured to connect the processor 110 and the camera 193, the display 194, the wireless communication module 160, the audio module 170, the sensor module 180, or the like. The GPIO interface may alternatively be configured as an I2C interface, an I2S interface, a UART interface, an MIPI interface, or the like.

The USB interface 130 is an interface that complies with USB standard specifications, and may be specifically a Mini USB interface, a Micro USB interface, a USB Type C interface, or the like. The USB interface 130 may be configured to be connected to the charger to charge the electronic device 100, or may be configured to transmit data between the electronic device 100 and a peripheral device, may be configured to be connected to a headset to play audio through the headset. The interface may alternatively be configured to be connected to another electronic device, for example, an AR device.

It may be understood that, an interface connection relationship between the modules shown in this embodiment of this application is merely an example for description, and constitutes no limitation on the structure of the electronic device 100. In some other embodiments of this application, different interface connection manners in the foregoing embodiments or a combination of a plurality of interface connection manners may alternatively be used for the electronic device 100.

The charging management module 140 is configured to receive a charging input from the charger. The charger may be a wireless charger or a wired charger. In some embodiments of wired charging, the charging management module 140 may receive a charging input from a wired charger through the USB interface 130. In some embodiments of wireless charging, the charging management module 140 may receive a wireless charging input through a wireless charging coil of the electronic device 100. When charging the battery 142, the charging management module 140 may further supply power to the electronic device through the power management module 141.

The power management module 141 is configured to be connected to the battery 142, the charging management module 140, and the processor 110. The power management module 141 receives an input from the battery 142 and/or the charging management module 140, and supplies power to the processor 110, the internal memory 121, an external memory, the display 194, the camera 193, the wireless communication module 160, and the like. The power management module 141 may be further configured to monitor parameters such as a battery capacity, a battery cycle count, and a battery health status (leakage or impedance). In some other embodiments, the power management module 141 may alternatively be disposed in the processor 110. In some other embodiments, the power management module 141 and the charging management module 140 may alternatively be disposed in a same device.

A wireless communication function of the electronic device 100 may be implemented through the antenna 1, the antenna 2, the mobile communication module 150, the wireless communication module 160, the modem processor, the baseband processor, and the like.

The antenna 1 and the antenna 2 are configured to transmit or receive an electromagnetic wave signal. Each antenna in the electronic device 100 may be configured to cover one or more communication frequency bands. Different antennas may also be multiplexed to increase antenna utilization. For example, the antenna 1 may be multiplexed as a diversity antenna of a wireless local area network. In some other embodiments, the antenna may be used together with a tuning switch.

The mobile communication module 150 may provide a solution for wireless communication that is applied to the electronic device 100 and that includes 2G/3G/4G/5G and the like. The mobile communication module 150 may include at least one filter, switch, power amplifier, and low noise amplifier (low noise amplifier, LNA), and the like. The mobile communication module 150 may receive an electromagnetic wave through the antenna 1, perform processing such as filtering or amplification on the received electromagnetic wave, and transmit a processed electromagnetic wave to the modem processor for demodulation. The mobile communication module 150 may further amplify a signal obtained after modulation by the modem processor, and convert, through the antenna 1, an amplified signal into an electromagnetic wave for radiation. In some embodiments, at least some functional modules in the mobile communication module 150 may be disposed in the processor 110. In some embodiments, at least some functional modules in the mobile communication module 150 may be disposed in a same component as at least some modules in the processor 110.

The modem processor may include a modulator and a demodulator. The modulator is configured to adjust a to-be-sent low-frequency baseband signal to a medium/high-frequency signal. The demodulator is configured to demodulate a received electromagnetic wave signal into a low-frequency baseband signal. Then, the demodulator transmits, to the baseband processor for processing, the low-frequency baseband signal obtained through demodulation. The low-frequency baseband signal is processed by the baseband processor and then transferred to the application processor. The application processor outputs a sound signal by using an audio device (which is not limited to the speaker 170A, the receiver 170B, or the like), or displays an image or a video by using the display 194. In some embodiments, the modem processor may be an independent device. In some other embodiments, the modem processor may be independent of the processor 110 and disposed in a same device as the mobile communication module 150 or another functional module.

The wireless communication module 160 may provide a solution for wireless communication that is applied to the electronic device 100 and that includes a wireless local area network (wireless local area networks, WLAN) (for example, a wireless fidelity (wireless fidelity, Wi-Fi) network), Bluetooth (bluetooth, BT), a global navigation satellite system (global navigation satellite system, GNSS), frequency modulation (frequency modulation, FM), a near field communication (near field communication, NFC) technology, an infrared (infrared, IR) technology, and the like. The wireless communication module 160 may be one or more components that integrate at least one communication processing module. The wireless communication module 160 receives an electromagnetic wave through the antenna 2, performs frequency modulation and filtering on an electromagnetic wave signal, and sends a processed signal to the processor 110. The wireless communication module 160 may further receive a to-be-sent signal from the processor 110, perform frequency modulation and amplification on the to-be-sent signal, and convert, through the antenna 2, the to-be-sent signal into an electromagnetic wave for radiation.

In some embodiments, in the electronic device 100, the antenna 1 is coupled to the mobile communication module 150, and the antenna 2 is coupled to the wireless communication module 160, so that the electronic device 100 can communicate with a network and another device according to a wireless communication technology. The wireless communication technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), BT, GNSS, WLAN, NFC, FM, an IR technology, and/or the like. The GNSS may include a global positioning system (global positioning system, GPS), a global navigation satellite system (global navigation satellite system, GLONASS), a BeiDou navigation satellite system (beidou navigation satellite system, BDS), a quasi-zenith satellite system (quasi-zenith satellite system, QZSS), and/or a satellite based augmentation system (satellite based augmentation systems, SBAS).

The electronic device 100 implements a display function by using the GPU, the display 194, the application processor, and the like. The GPU is a microprocessor for image processing and is connected to the display 194 and the application processor. The GPU is configured to perform mathematical and geometric computation, for image rendering. The processor 110 may include one or more GPUs that execute program instructions to generate or change display information.

The display 194 is configured to display an image, a video, or the like. The display 194 may include a display panel. The display panel may be a liquid crystal display (liquid crystal display, LCD), an organic light-emitting diode (organic light-emitting diode, OLED), an active-matrix organic light emitting diode (active-matrix organic light emitting diode, AMOLED), a flex light-emitting diode (flex light-emitting diode, FLED), a Miniled, a MicroLed, a Micro-oLed, a quantum dot light emitting diode (quantum dot light emitting diodes, QLED), or the like. In some embodiments, the electronic device 100 may include 1 or N displays 194, where N is a positive integer greater than 1.

The electronic device 100 may implement the photographing function through the ISP, the camera 193, the video codec, the GPU, the display 194, the application processor, and the like.

The ISP is configured to process data fed back by the camera 193. For example, during photographing, a shutter is opened, and light is transmitted to a photosensitive element of the camera through a lens. An optical signal is converted into an electrical signal. The photosensitive element of the camera transmits the electrical signal to the ISP for processing, to convert the electrical signal into an image visible to naked eyes. The ISP may further perform algorithm optimization on noise, luminance, and complexion of the image. The ISP may further optimize parameters such as exposure and a color temperature of a photographing scenario. In some embodiments, the ISP may be disposed in the camera 193.

The camera 193 is configured to capture a still image or a video. An optical image of an object is generated through a lens and is projected onto a photosensitive element. The photosensitive element may be a charge coupled device (charge coupled device, CCD) or a complementary metal-oxide-semiconductor (complementary metal-oxide-semiconductor, CMOS) phototransistor. The photosensitive element converts an optical signal into an electrical signal, and then transfers the electrical signal to the ISP to convert the electrical signal into a digital image signal. The ISP outputs the digital image signal to the DSP for processing. The DSP converts the digital image signal into an image signal in a standard format such as RGB or YUV. In some embodiments, the electronic device 100 may include 1 or N camera 193, where N is a positive integer greater than 1.

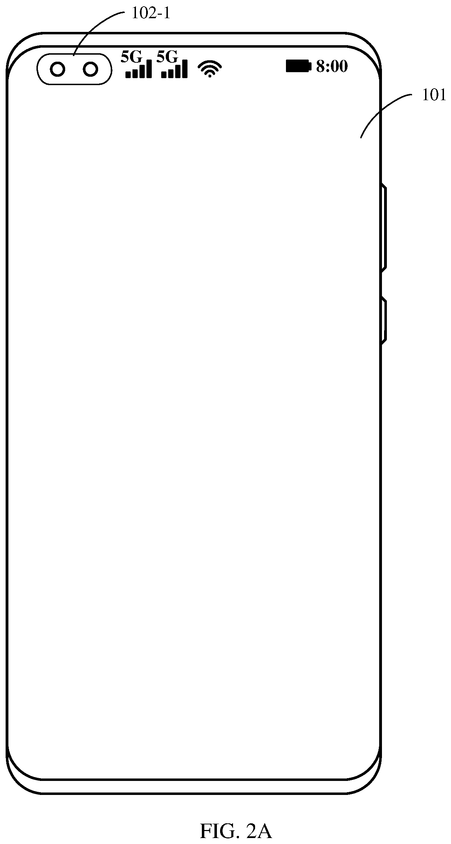

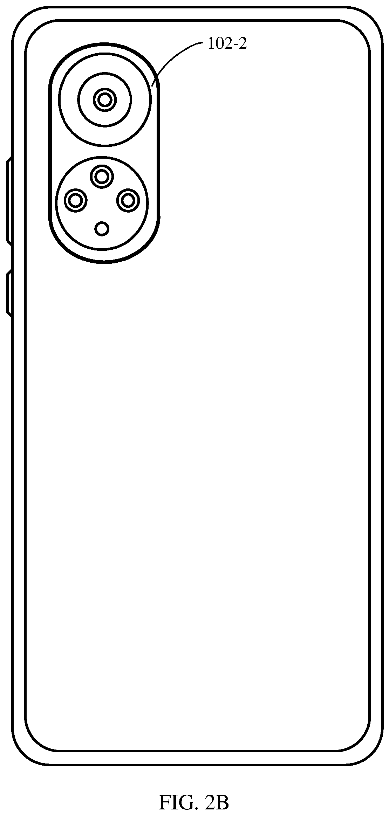

FIG. 2A and FIG. 2B are an example schematic diagram of a camera module. With reference to FIG. 2A and FIG. 2B, FIG. 2A and FIG. 2B respectively schematically show a front surface and a back surface of an electronic device 100. The front surface of the electronic device 100 may be understood as a side facing a user when the user uses the electronic device 100. The back surface of the electronic device 100 may be understood as a side facing away from the user when the user uses the electronic device 100.

The camera module 102 is configured to capture a still image or a video. The camera module 102 may be disposed on the front surface and/or the back surface of the electronic device 100. When the camera module 102 is disposed on the front surface of the electronic device 100, a front-facing camera 102-1 may be configured to photograph a scene located on a side of the front surface of the electronic device 100, for example, configured to take a selfie, and may be referred to as a front-facing camera in some embodiments. When the camera module 102 is disposed on the back surface of the electronic device 100, a rear-facing camera 102-2 may be configured to photograph a scene located on a side of the back surface of the electronic device 100, and may be referred to as a rear-facing camera in some embodiments. During photographing, the user may select a corresponding camera module based on a photographing requirement.

It should be noted that a quantity of disposed camera modules 102 is not limited in embodiments of this application, and there may be one, two, four, or more camera modules. For example, one or more camera modules 102 may be disposed on the front surface of the electronic device 100, and/or one or more camera modules 102 may be disposed on the back surface of the electronic device 100. When a plurality of camera modules 102 are disposed, the plurality of camera modules 102 may be exactly the same or different. For example, for the plurality of camera modules 102, optical parameters of lens are different, the lens are disposed at different locations, the lens are in different forms, and so on. Relative locations when the plurality of camera modules are disposed are not limited in embodiments of this application.

An image sensor component is mainly used for imaging. Specifically, the image sensor component captures an image, and exposes an image frame.

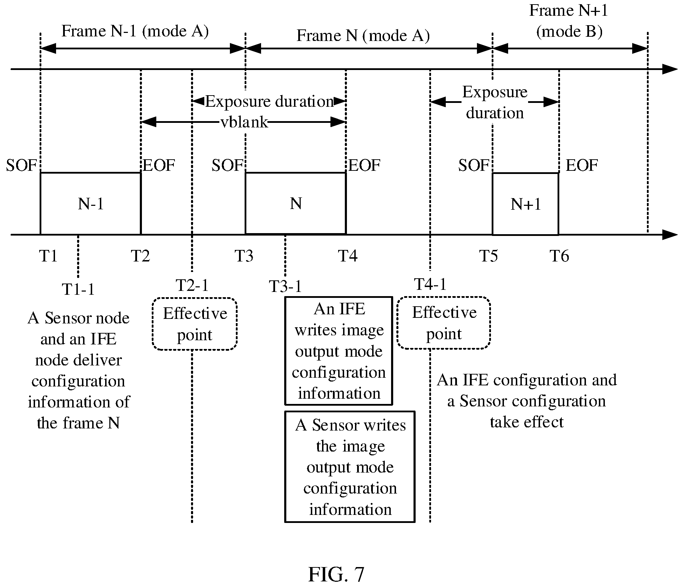

For example, an image sensor is further configured to: output a start of frame delimiter (start of frame delimiter, SOF) signal to identify a frame header of a current frame, and output an end of frame delimiter (end of frame delimiter, EOF) signal to identify a frame tail of the current frame. For example, a Frame Time (frame duration) of each frame is a length between an SOF and a next SOF, and includes an effective frame length between the SOF and an EOF and a dummy line (vertical blank, vblank, also referred to as a dummy line time, vertical blanking, or field blanking) in each frame. A specific correspondence is described in FIG. 7.

The digital signal processor is configured to process a digital signal. In addition to processing a digital image signal, the digital signal processor may further process another digital signal. For example, when the electronic device 100 selects a frequency, the digital signal processor is configured to perform Fourier transform, and the like on frequency energy.

The video codec is configured to compress or decompress a digital video. The electronic device 100 may support one or more video codecs. In this way, the electronic device 100 may play or record videos in a plurality of encoding formats, for example, moving picture experts group (moving picture experts group, MPEG) 1, MPEG2, MPEG3, and MPEG4.

The NPU is a neural-network (neural-network, NN) computing processor, and quickly processes input information with reference to a structure of a biological neural network, for example, a transfer mode between human brain neurons, and may further continuously perform self-learning. Applications such as intelligent cognition of the electronic device 100, for example, image recognition, face recognition, speech recognition, and text understanding, may be implemented by using the NPU.

The external memory interface 120 may be configured to connect to an external storage card, for example, a Micro SD card, to expand a storage capability of the electronic device 100. The external storage card communicates with the processor 110 through the external memory interface 120, to implement a data storage function. For example, files such as music and videos are stored in the external storage card.

The internal memory 121 may be configured to store a computer-executable program code, and the executable program code includes instructions. The processor 110 runs the instructions stored in the internal memory 121, to perform various function applications and data processing of the electronic device 100. The internal memory 121 may include a program storage area and a data storage area. The program storage area may store an operating system, an application required by at least one function (for example, a sound playing function or an image playing function), and the like. The data storage area may store data (for example, audio data and a phone book) and the like created during use of the electronic device 100. In addition, the internal memory 121 may include a high-speed random access memory, and may further include a nonvolatile memory, for example, at least one magnetic disk storage device, a flash memory device, or a universal flash storage (universal flash storage, UFS).

The electronic device 100 may implement an audio function, for example, music playing or sound recording, through the audio module 170, the speaker 170A, the receiver 170B, the microphone 170C, the headset jack 170D, the application processor, and the like.

The audio module 170 is configured to convert digital audio information into an analog audio signal for output, and is further configured to convert an analog audio input into a digital audio signal. The audio module 170 may be further configured to encode and decode an audio signal. In some embodiments, the audio module 170 may be disposed in the processor 110 or some functional modules of the audio module 170 may be disposed in the processor 110.

A software system of the electronic device 100 may use a layered architecture, an event-driven architecture, a microkernel architecture, a micro-service architecture, or a cloud architecture. In the embodiments of this application, an Android system with a layered architecture is used as an example to describe the software structure of the electronic device 100.

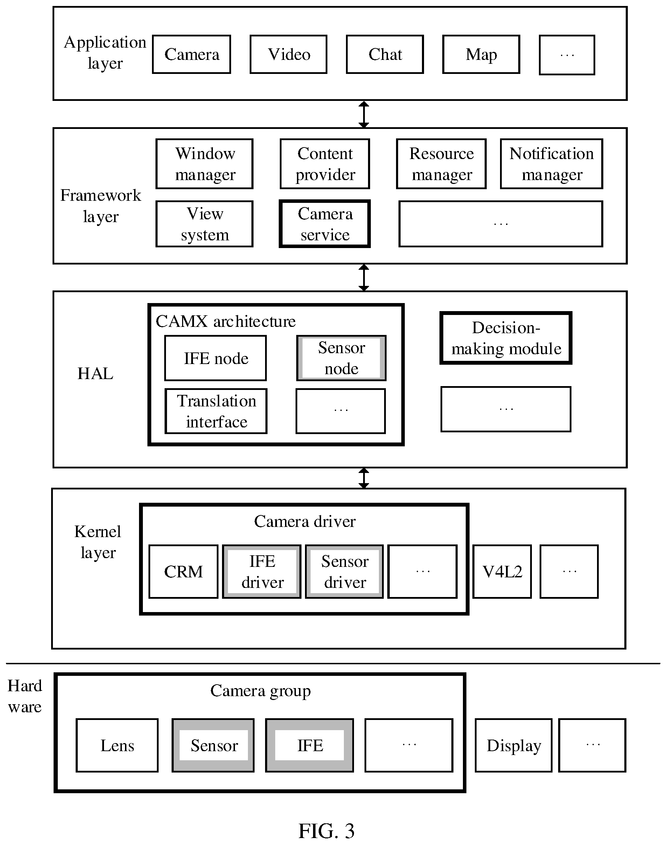

FIG. 3 is a block diagram of a software structure of an electronic device 100 according to an embodiment of this application.

The layered architecture of the electronic device 100 divides software into several layers, and each layer has a clear role and task. The layers communicate with each other through a software interface. In some embodiments, the Android system is divided into an application layer, a framework layer, a hardware abstraction layer (hardware abstract layer, HAL), and a kernel layer from top to bottom. It may be understood that FIG. 2A and FIG. 2B are only an example. That is, the layers obtained through division in the electronic device are not limited to those shown in FIG. 3. For example, an Android runtime (Android runtime) and a system library (libraries) layer may be further included between the application framework layer and the HAL layer.

The application layer may include a series of application packages.

As shown in FIG. 3, the application packages may include applications such as Camera, Gallery, Calendar, Phone, Map, Navigation, WLAN, Bluetooth, Music, Video, and Messages.

The framework layer provides an application programming interface (application programming interface, API) and a programming framework for the applications at the application layer. The application framework layer includes some predefined functions.

As shown in FIG. 3, the application framework layer may include a window manager, a content provider, a view system, a camera service, a resource manager, a notification manager, and the like.

The window manager is configured to manage a window program. The window manager may obtain a display size, determine whether there is a status bar, whether to lock a screen, whether to take a screenshot, and the like.

The content provider is configured to store and obtain data, and enable the data to be accessible by an application. The data may include a video, an image, audio, calls that are made and answered, a browsing history and a bookmark, a phone book, and the like.

The view system includes visual controls, for example, a control for displaying text and a control for displaying a picture. The view system may be configured to build an application. A display interface may include one or more views. For example, a display interface including an SMS message notification icon may include a view for displaying a text and a view for displaying a picture.

The camera service, which may also be referred to as a camera service, is not limited in this application. The camera service is configured to invoke a camera (including a front-facing camera and/or a rear-facing camera) in response to a request of the application.

The resource manager provides various resources for an application, for example, a localized string, an icon, a picture, a layout file, and a video file.

The notification manager enables an application to display notification information in the status bar, and may be configured to convey a notification-type message. The displayed notification information may automatically disappear after a short stay without user interaction. For example, the notification manager is configured to provide a notification of download completion, a message reminder, and the like. The notification manager may alternatively be a notification that appears in a top status bar of the system in a form of a graph or scroll bar text, for example, a notification of an application running in a background, or a notification that appears on a screen in a form of a dialog window. For example, text information is prompted in the status bar, an alert tone is produced, the electronic device vibrates, or an indicator light blinks.

The HAL layer is configured to perform hardware abstraction, to provide a virtual hardware platform for an operating system. The HAL layer may include but is not limited to a decision-making module, a CAMX architecture, and the like.

The decision-making module may be a multi-camera decision-making module. The decision-making module may determine, based on scene information (including information such as ambient luminance and environment dynamic range), a camera that actually captures an image in a camera group, which may be referred to as a target camera. The target camera may be a front-facing camera, a rear-facing camera, or the like in the electronic device.

In addition, the decision-making module may further determine a target image output mode that needs to be enabled for the target camera. For the image output mode, refer to the foregoing descriptions. Details are not described herein again. In addition, the target image output mode may be selected with reference to a photographing scene, a photographing parameter (zoom ratio), or the like. For implementation details, refer to descriptions in subsequent embodiments. Details are not described herein again.

The CAMX architecture is a logical architecture at the HAL layer. The CAMX architecture includes a sensor node (sensor node) and an image front end (image front end, IFE) node (IFE node). The sensor node in the CAMX architecture is in a one-to-one correspondence with a camera sensor in the electronic device, and the sensor node may configure the camera sensor to enable a specified image output mode. For example, the sensor node may transfer, to the target camera, a camera parameter (which may also be referred to as a configuration parameter) required for enabling the target image output mode, so that a target camera sensor performs image output in the target image output mode. The IFE node is configured to configure a preprocessing parameter required for running of the IFE, so that the IFE may preprocess a preview stream collected by the target camera based on the target image output mode. For example, processing such as color correction, downsampling, or demosaicing is performed on an image frame of the preview stream and an image frame of a video stream.

The CAMX architecture further includes a CAMX translation interface (camera serial interface decoder, CSL). The CAMX CSL may receive the configuration parameter from the sensor node, and convert the configuration parameter into an I/O control instruction that may be identified by the kernel layer. In addition, the CAMX CSL may further indicate, by using a V4L2 at the kernel layer, the CRM to transfer the I/O control instruction corresponding to the camera parameter to the corresponding camera driver, and the camera driver writes the I/O control instruction corresponding to the camera parameter into the camera sensor, so that the camera sensor performs image output based on the specified image output mode.

The CAMX CSL receives the preprocessing parameter from the IFE node, and converts the preprocessing parameter into the I/O control instruction that may be identified by the kernel layer; and then indicate, by using the V4L2, the CRM to transfer the I/O control instruction corresponding to the preprocessing parameter to a corresponding ISP driver, and the ISP driver writes the I/O control instruction corresponding to the preprocessing parameter into the IFE, so that the IFE has a capability of preprocessing an image frame collected based on the target image output mode.

The kernel layer includes at least a linux video device driver (Video for linux2, V4L2) and the camera driver.

The camera driver includes but is not limited to a camera request manager (camera request manager, CRM), a sensor driver, an IFE driver, and the like.

The V4L2 may be invoked by the HAL layer. The CRM is configured to manage a driver corresponding to a camera-related component at the kernel layer, for example, the IFE driver and the sensor driver. In some examples, the HAL may indicate the CRM to manage the driver corresponding to a camera-related component by using the V4L2.

The camera driver may be used to drive a hardware module having a photographing function, for example, the camera sensor. In other words, the camera driver needs to be responsible for data exchange with the camera sensor. Certainly, the kernel layer may further include driver software such as an audio driver and a sensor driver. This is not limited in this embodiment of this application.

The hardware includes a camera group (for description, refer to the foregoing descriptions, and details are not described herein again), a display, and the like. The camera group includes but is not limited to physical components such as an IFE, a sensor, and a lens.

It may be understood that the layers in the software structure shown in FIG. 3 and components included at the layers do not constitute a specific limitation on the electronic device 100. In some other embodiments of this application, the electronic device 100 may include more or fewer layers than those shown in the figure, and each layer may include more or fewer components. This is not limited in this application.

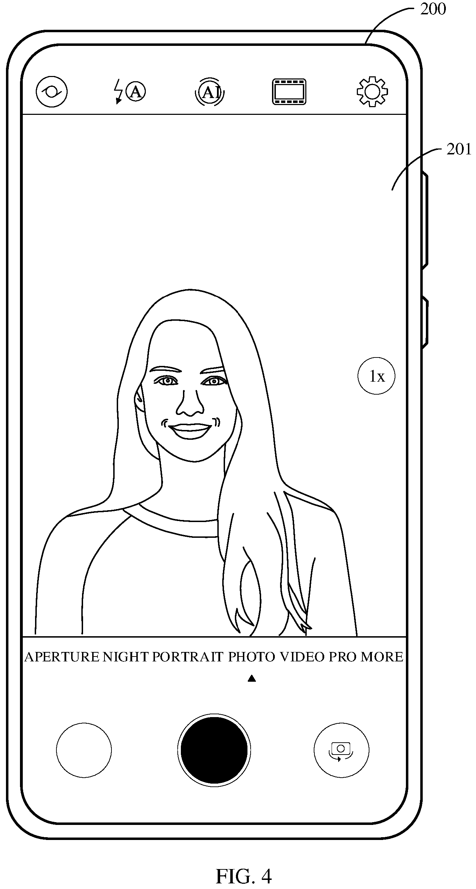

FIG. 4 is an example schematic diagram of a user interface. As shown in FIG. 4, a user taps a camera application. The camera application displays an image preview interface 201 in a display interface 200 in response to a received user operation. The image preview interface 201 displays a preview image captured by a camera. In this embodiment of this application, only a processing manner of the preview image is used as an example for description. In another embodiment, the solution in this embodiment of this application may be further applied to another scene photographing scenario such as a video recording, which is not limited in this application.

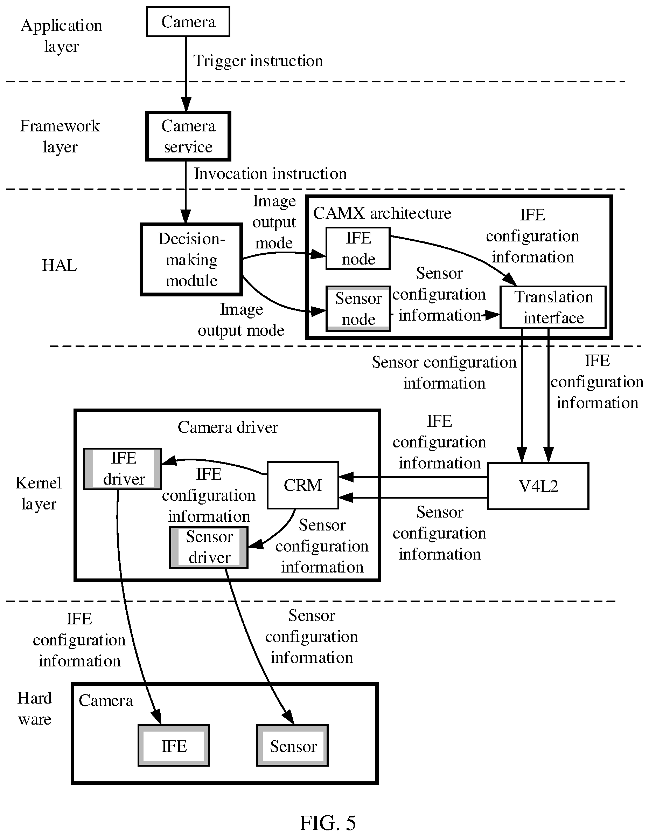

FIG. 5 is an example schematic diagram of module interaction. As shown in FIG. 5, specifically, after a user taps a camera application, the camera application sends a trigger instruction to a camera service, to indicate to invoke the camera service. For example, the trigger instruction includes photographing mode information. In this embodiment of this application, after the camera application is started, a photo mode is entered by default, as shown in FIG. 4. Correspondingly, the trigger instruction includes but is not limited to photo mode information.

In response to the trigger instruction, the camera service sends an invocation instruction to a decision-making module, to invoke a camera. The invocation instruction includes but is not limited to the photographing mode information, for example, the photo mode.

The decision-making module may determine, based on scene information (including information such as ambient luminance and environment dynamic range), a camera that actually captures an image in a camera group, which may be referred to as a target camera. The target camera may be a front-facing camera, a rear-facing camera, or the like in an electronic device.

The decision-making module may further determine a target image output mode that needs to be enabled for the target camera. In this embodiment of this application, the decision-making module may first select a default image output mode, namely, a binning mode. In a subsequent photographing process, the decision-making module may select a corresponding image output mode based on each image frame captured by the camera and another parameter, for example, with reference to a photographing scene and a photographing parameter (zoom ratio), to implement image output mode switching.

Still as shown in FIG. 5, after making a decision on the target camera, the decision-making module may send information such as the target image output mode to an IFE node and a Sensor node in a CAMX architecture that correspond to the target camera, to indicate the Sensor node and the IFE node to generate corresponding image output mode configuration information based on the target image output mode.

For example, in response to the received target image output mode, the Sensor node configures a camera sensor to enable a specified image output mode. Specifically, the Sensor node generates Sensor configuration information. The Sensor configuration information includes but is not limited to the image output mode configuration information (which may also be referred to as Sensor image output configuration information) corresponding to the target image output mode, which may also be understood as image output mode configuration information required for enabling the target image output mode. Optionally, the Sensor configuration information further includes another camera parameter (which may also be referred to as a configuration parameter or an exposure parameter), for example, a frame length. This is not limited in this application. In some examples, the camera parameter and the Sensor image output configuration information may be delivered at a same moment, or may be delivered at different moments. The camera parameter is used by a Sensor to expose the image frame. Correspondingly, the camera parameter needs to be delivered before the image frame is exposed. The image output mode configuration parameter is used to perform image output on the image frame. Correspondingly, the image output mode configuration parameter needs to be delivered before image output is performed on the image frame. This is not limited in this application.

Still as shown in FIG. 5, for example, the IFE generates IFE configuration information (which may also be referred to as IFE image output configuration information) in response to an indication of the decision-making module. The IFE configuration information includes but is not limited to a preprocessing parameter required for running of an IFE, so that the IFE can preprocess a preview stream captured by the target camera based on the target image output mode. For example, processing such as color correction, downsampling, or demosaicing is performed on an image frame of the preview stream and an image frame of a video stream.

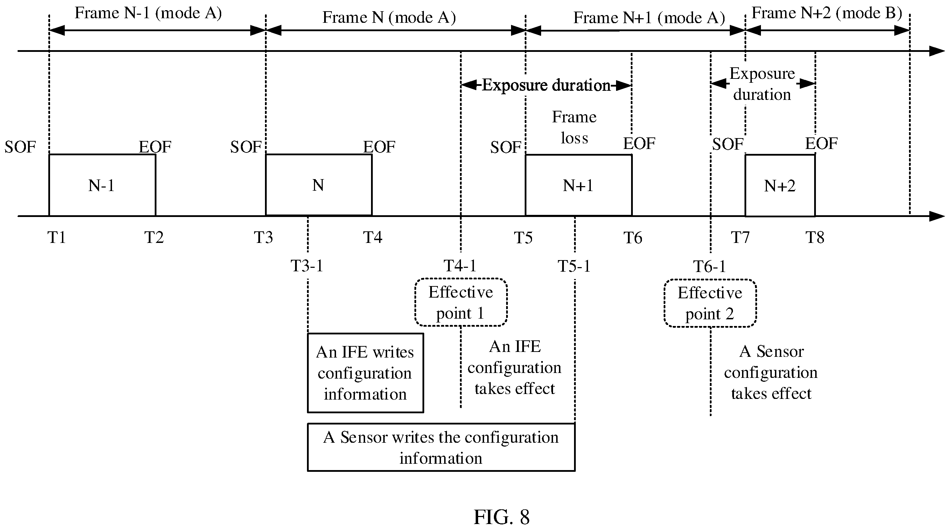

In this embodiment of this application, configuration information of the IFE needs to correspond to configuration information of the Sensor. For example, when the Sensor operates in the binning image output mode, the preprocessing parameter required for running of the IFE also corresponds to the binning image output mode. If the Sensor operates in another mode, for example, an HDR mode, and the preprocessing parameter required for running of the IFE is in the binning image output mode, the IFE cannot process an image input by the Sensor, and the IFE discards the image frame. A specific example is described below (FIG. 8).

Still as shown in FIG. 5, for example, the IFE node sends the IFE configuration information to a translation interface. The Sensor node sends the Sensor configuration information to the translation interface. The translation interface indicates, by using a V4L2 at a kernel layer, a CRM to transfer an I/O control instruction corresponding to the camera parameter to a corresponding camera driver. The camera driver writes the I/O control instruction corresponding to the camera parameter into the camera sensor, so that the camera sensor performs image output based on the specified image output mode.

Specifically, the V4L2 sends the IFE configuration information and the Sensor configuration information to the CRM. The CRM sends the IFE configuration information to an IFE driver in a proper time sequence (a specific time sequence is described below with reference to the accompanying drawings), and sends the Sensor configuration information to a sensor driver. After receiving the IFE configuration information, the IFE driver writes the IFE configuration information into the IFE. After receiving the Sensor configuration information, the sensor driver writes the Sensor configuration information into the Sensor. The Sensor captures an image based on the Sensor configuration information. For example, the Sensor captures the image based on the camera parameter and the image output mode configuration information in the Sensor configuration information. The Sensor outputs the captured image to the IFE. The IFE may process the image based on the IFE configuration information. For example, the IFE may preprocess the image based on a preprocessing parameter corresponding to the target image output mode.

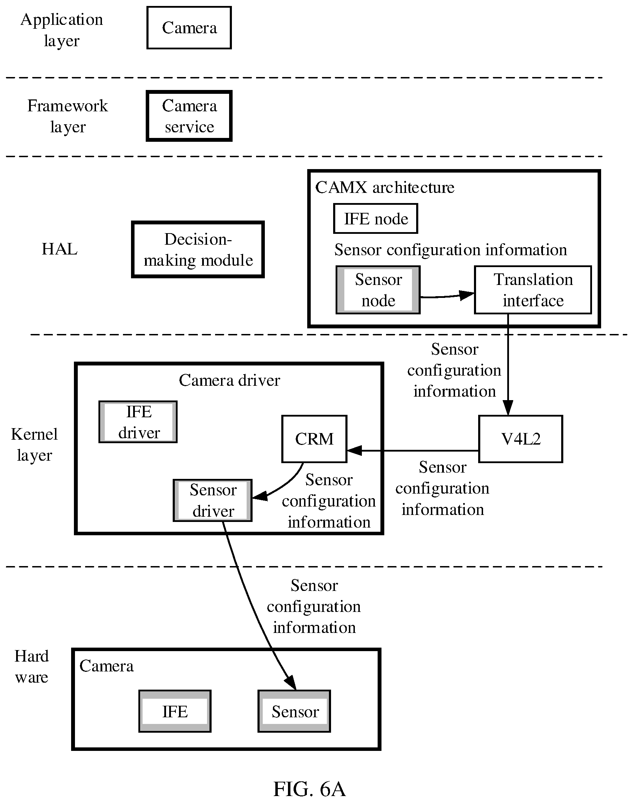

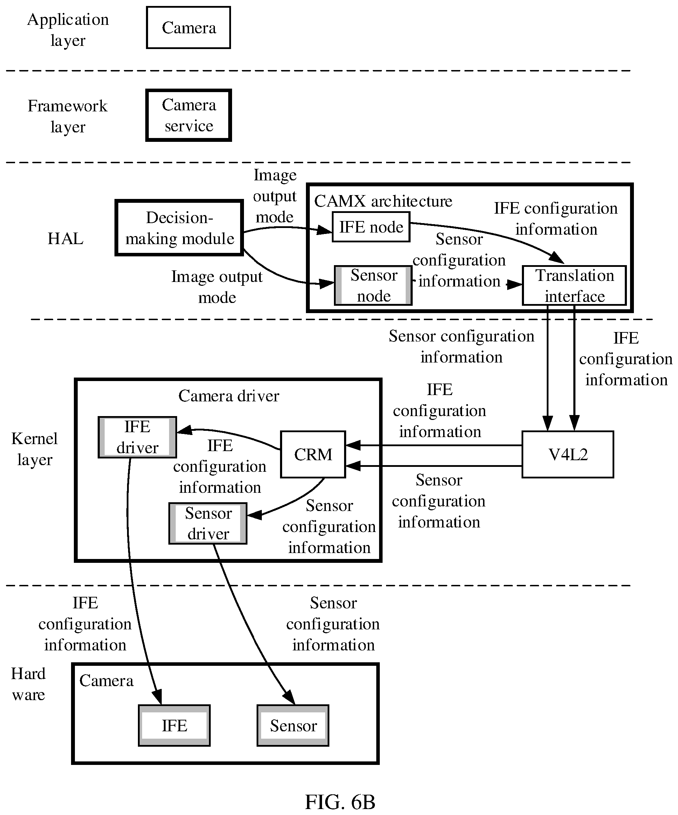

FIG. 6A and FIG. 6B are example schematic diagrams of module interaction. As shown in FIG. 6A, for example, in a photographing process, a decision-making module makes a decision on each frame. If it is determined that an image output mode remains unchanged, information such as an image output mode does not need to be sent. In this example, a Sensor node delivers corresponding Sensor configuration information to a CRM in advance (for example, which may be one frame earlier or a plurality of frames earlier, which is not limited in this application) for each frame (for a specific data transmission procedure, refer to the descriptions in FIG. 4, and details are not described herein again). Because the decision-making module does not switch the image output mode, correspondingly, the Sensor configuration information includes a camera parameter such as a frame length, and does not include Sensor image output mode configuration information. That is, when exposing an image frame corresponding to the Sensor configuration information, the Sensor performs exposure based on a current image output mode (namely, a latest image output mode).

For example, after obtaining the Sensor configuration information, the CRM may send the Sensor configuration information to a Sensor driver at a proper occasion, so that the Sensor driver writes the Sensor configuration information into a register corresponding to the Sensor. A specific implementation is described in FIG. 9.

As shown in FIG. 6B, if the decision-making module determines to switch the image output mode, the decision-making module sends the image output mode to an IFE node and the Sensor node, to indicate to switch to a target image output mode. In this example, the Sensor node generates the Sensor configuration information. The Sensor configuration information includes but is not limited to the image output mode configuration information corresponding to the target image output mode, which may also be understood as image output mode configuration information required for enabling the target image output mode. Optionally, the Sensor configuration information further includes another camera parameter (which may also be referred to as a configuration parameter), for example, a frame length. This is not limited in this application.

The IFE generates IFE configuration information in response to an indication of the decision-making module. The IFE configuration information includes but is not limited to a preprocessing parameter required for running of the IFE, so that the IFE can preprocess a preview stream captured by the target camera based on the target image output mode. For example, processing such as color correction, downsampling, or demosaicing is performed on an image frame of the preview stream and an image frame of a video stream.

FIG. 7 is an example diagram of an image frame exposure time sequence. As shown in FIG. 7, before a frame N-1 (including the frame N-1), a Sensor performs image output on each image frame based on a mode A (which may also be referred to as a first image output mode). In this example, configurations (including a frame length, an image output mode, and the like) of the Sensor and an IFE are configured as new configurations that take effect in a frame N+1. To be specific, for configuration information of a frame N, a Sensor node and an IFE node deliver Sensor configuration information and IFE configuration information of the frame N to a CRM before (which may be at least one frame earlier, which is not limited in this application) the frame N. In the frame N, the CRM delivers the Sensor configuration information and the IFE configuration information of the frame N to a Sensor driver and an IFE driver, so that the Sensor driver and the IFE driver respectively write the Sensor configuration information and the IFE configuration information into the Sensor and the IFE in the frame N. The Sensor and the IFE are configured to enable the configuration information of the frame N to take effect in the frame N+1. Correspondingly, the Sensor and the IFE are configured to enable the Sensor configuration information and IFE configuration information of the frame N to take effect in the frame N+1.

For example, still as shown in FIG. 7, in the frame N-1, the Sensor performs image exposure based on the mode A (which may also be referred to as the first image output mode). Before a moment T1-1, a decision-making module makes a decision on a target image output mode and a target camera based on environment information. The target image output mode is a second image output mode (for example, a mode B). In other words, a current target image output mode (namely, the first image output mode) is switched to the second image output mode (mode B). Optionally, the decision-making module may make a decision at any moment before the frame N (namely, a moment T3), for example, the frame N-1, or a frame N-2. This is not limited in this application. A delivery time, a writing time, and the like of each piece of configuration information in this embodiment of this application are merely examples, and may be set according to an actual requirement. This is not limited in this application.

For example, with reference to FIG. 6B, after making a decision on the target camera, the decision-making module may send information such as the target image output mode to an IFE node and a Sensor node in a CAMX architecture that correspond to the target camera, to indicate the Sensor node and the IFE node to generate corresponding image output mode configuration information based on the target image output mode.

For example, in response to the received target image output mode, the Sensor node configures a camera sensor to enable a specified image output mode. Specifically, the Sensor node generates the Sensor configuration information of the frame N. The Sensor configuration information includes but is not limited to the image output mode configuration information corresponding to the target image output mode, which may also be understood as an image output mode configuration parameter required for enabling the target image output mode. For example, the image output mode configuration information includes but is not limited to switching configuration information and effective configuration information. The switching configuration information includes the image output mode configuration parameter required for the target image output mode, and the effective configuration information is used to indicate that the switching configuration information is completely written.

Optionally, the Sensor configuration information further includes another camera parameter (which may also be referred to as a configuration parameter), for example, a frame length. This is not limited in this application.

Still as shown in FIG. 5, for example, the IFE node generates the IFE configuration information in response to an indication of the decision-making module. The IFE configuration information includes but is not limited to a preprocessing parameter required for running of the IFE, so that the IFE can preprocess a preview stream captured by the target camera based on the target image output mode. For example, processing such as color correction, downsampling, or demosaicing is performed on an image frame of the preview stream and an image frame of a video stream.

Still as shown in FIG. 7, at the moment T1-1 (which may be any moment before the frame N, and is not limited in this application), the Sensor node delivers the Sensor configuration information (including image output mode configuration information corresponding to the second image output mode, a camera parameter, and the like) of the frame N to the CRM, and the IFE node delivers the IFE configuration information of the frame N to the CRM. The CRM obtains the Sensor configuration information and the IFE configuration information that correspond to the frame N (for a specific data stream, refer to FIG. 6B, and details are not described herein again). Optionally, as described above, the camera parameter and the image output configuration information in the Sensor configuration information may be delivered to the CRM at different times. For a specific delivery procedure, refer to embodiments of the conventional technology. This is not limited in this application.

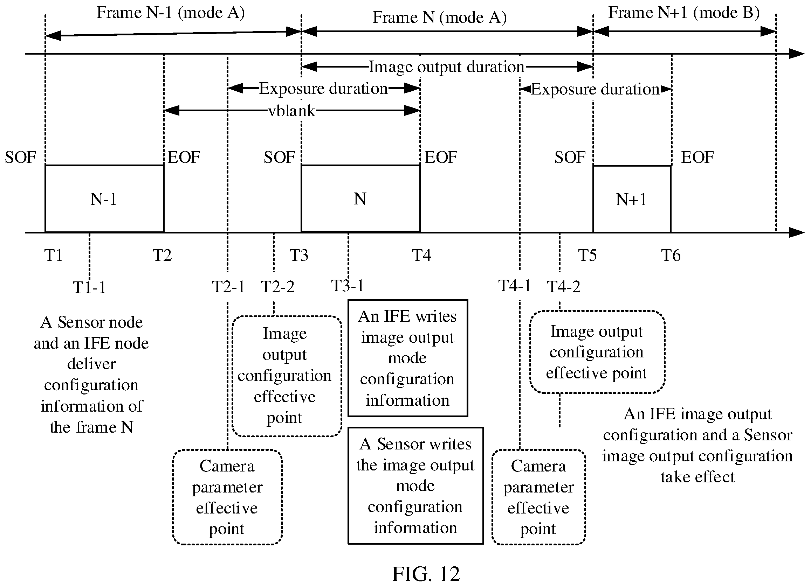

In this embodiment of this application, the Sensor is preconfigured with effective point information. The Sensor may obtain the Sensor configuration information at a specified moment (the moment is referred to as an effective point) in each frame based on the effective point information, and start to perform image exposure based on the Sensor configuration information. The effective point is a start point of exposure duration of the image frame, and an EOF of the image frame is an end point of the exposure duration. Optionally, in some examples, an effective point of the image output configuration information may be different from an effective point of the camera parameter. Specifically, as described above, the camera parameter is mainly used when the Sensor exposes the image frame. Therefore, the camera parameter takes effect at an exposure start point. The Sensor may expose the image frame based on the camera parameter. The Sensor image output configuration information is mainly used by the Sensor to perform image output on the image frame (for example, at moments T3-T5 in FIG. 7, namely, within a frame length of the frame N). Image output duration corresponds to a frame length of the image frame, for example, the moments T3-T5 in FIG. 7, namely, the frame length of the frame N. The Sensor performs image output on the frame N within the image output duration. Optionally, within the image output duration, the Sensor actually performs an image output action (namely, output of an exposed image to the IFE) between SOF-EOF of the frame N, and the Sensor performs another configuration in another time (for example, moments T4-T5) in the frame N. Correspondingly, an effective point of the image output configuration information of the Sensor is set before image output is performed on the image frame. In other words, the Sensor image output configuration information only needs to take effective before image output is performed on the image frame. A specific example is described in FIG. 12~FIG. 14.

Optionally, effective point information is used to indicate relative duration between the effective point and the SOF. For example, the effective point information indicates that the relative duration is X. Correspondingly, the Sensor starts to expose the image frame at a moment that is duration X earlier than an SOF of each frame.

For example, as shown in FIG. 7, at a moment T2-1, the Sensor determines, based on the effective point information, that a moment corresponding to an effective point of the frame N arrives. In this example, the moment is an exposure start point of the frame N. The Sensor obtains the written Sensor configuration information, and starts to expose the frame N based on the camera parameter in the Sensor configuration information. The moment T2-1 and the SOF (namely, the moment T3) of the frame N are separated by the duration X.

For example, the Sensor performs image output on the frame N based on the Sensor image output configuration information at the moment T3. Actual image output duration is moments T3-T4, namely, the SOF to the EOF of the frame N. In this embodiment of this application, duration (namely, the moments T3-T4) of the frame N is referred to as image output duration of the frame N.

For example, the Sensor obtains the written Sensor configuration information at the effective point. Image output mode configuration information in current configuration information of the Sensor indicates the first image output mode, namely, the mode A. Correspondingly, the Sensor performs exposure and image output on the frame N based on the camera parameter in the configuration information and the first image output mode.

Still as shown in FIG. 7, as described above, the configuration information of the frame N is written in the frame N, and takes effect in the frame N+1. Specifically, the CRM may send the Sensor configuration information (including the camera parameter and the image output mode configuration information corresponding to the second image output mode) corresponding to the frame N to the Sensor driver at a moment T3-1 (which is usually any moment between the SOR and the EOF, may be set according to an actual requirement, and is not limited in this application) in the frame N, and the CRM sends the IFE configuration information (including the image output mode configuration information (the image output mode configuration information indicates the second image output mode)) corresponding to the frame N to the IFE driver.

The Sensor driver and the IFE driver respectively write corresponding configuration information to the Sensor and the IFE at the moment T3-1. It should be noted that there may be a delay between the foregoing two write actions. This is not limited in this application.

In this embodiment of this application, as described above, the image output mode configuration information of the Sensor may further include the switching configuration information and the effective configuration information. For example, the Sensor driver writes the switching configuration information into a register (denoted as an image output mode register) corresponding to the Sensor. After the Sensor driver writes all switching configuration information into the register, the Sensor writes the effective configuration information into the corresponding register (denoted as an effective register). For a writing manner of other configuration information (for example, the camera parameter), refer to the conventional technology. This is not limited in this application.

For example, the IFE driver writes the IFE configuration information of the frame N into a register corresponding to the IFE.

Optionally, a quantity of registers into which the IFE performs writing is less than a quantity of registers into which the Sensor needs to perform writing. Usually, the configuration information of the Sensor is long, and needs to be written into a large quantity of registers.

At a moment T4-1, the Sensor determines, based on the effective point information, that a moment corresponding to an effective point of the frame N+1 arrives. In this example, the moment is an exposure moment of the frame N+1. The Sensor obtains the written Sensor configuration information (namely, the configuration information that is of the frame N and that is written at T3-1), and starts to expose the frame N+1 based on the Sensor configuration information. The moment T4-1 and the SOF (namely, the moment T3) of the frame N are separated by the duration X.

For example, the Sensor performs image output on the frame N+1 based on the Sensor image output configuration information at the moment T5. Actual image output duration is moments T5~T6, namely, an SOF to an EOF of the frame N+1. In this embodiment of this application, duration (namely, moments T5~T7) of the frame N+1 is referred to as image output duration of the frame N+1.

For example, the Sensor obtains a configuration of the effective register at the effective point. In an example, if the Sensor has completely written the image output mode configuration information of the frame N before T4-1, to be specific, the Sensor has written all the switching configuration information into the corresponding image output mode register, and written the effective configuration information into the corresponding effective register, correspondingly, the Sensor determines a configuration of the image output mode register corresponding to the effective register based on the configuration of the effective register. That is, the Sensor performs image output on the frame N+1 based on the image output mode configuration information (namely, the modeB, which may also be referred to as the second image output mode) of the frame N.

In another example, if the Sensor cannot completely write the image output mode configuration information of the frame N before T4-1, to be specific, the Sensor cannot write the effective configuration information into the corresponding effective register, correspondingly, the Sensor determines, at the effective point, that writing into the effective register is not completed, and therefore, the Sensor does not enable the configuration information being written to take effect, but enable old configuration information to take effect. For example, FIG. 8 is an example diagram of an image frame exposure time sequence. As shown in FIG. 8, the CRM may send the Sensor configuration information (including the camera parameter and the image output mode configuration information (the image output mode configuration information indicates the second image output mode)) corresponding to the frame N to the Sensor driver at the moment T3-1 (which is usually any moment between the SOR and the EOF, may be set according to an actual requirement, and is not limited in this application) in the frame N, and send the IFE configuration information (including the image output mode configuration information (the image output mode configuration information indicates the second image output mode)) corresponding to the frame N to the IFE driver.

The Sensor driver and the IFE driver respectively write corresponding configuration information to the Sensor and the IFE at the moment T3-1. It should be noted that there may be a delay between the foregoing two write actions. This is not limited in this application.

For example, the Sensor driver writes the switching configuration information into a corresponding register (denoted as an image output mode register). After writing all switching configuration information into the register, the Sensor driver writes the effective configuration information into a corresponding register (denoted as an effective register). For a writing manner of other configuration information (for example, the camera parameter), refer to the conventional technology. This is not limited in this application.

For example, the IFE driver writes the IFE configuration information of the frame N into a register corresponding to the IFE.

As shown in FIG. 8, in this example, the switching configuration information of the Sensor is long, and needs to be written into a large quantity of image output mode registers. Consequently, the Sensor cannot completely write the switching configuration information before an effective point 1 (namely, T4-1) of the frame N+1. At the effective point 1, because the Sensor cannot detect that the effective configuration information is written into the effective register, which may also be understood that the Sensor does not receive the effective configuration information of the frame N, correspondingly, the Sensor still performs image output on the frame N+1 based on the old image output mode configuration information (namely, modeA).

The Sensor outputs the exposed frame N+1 to the IFE. Current configuration information of the IFE is new image output mode configuration information, that is, indicates the second image output mode. Correspondingly, the IFE detects that an image output mode (namely, the second image output mode, namely, the modeB) of the IFE does not match an image output mode (namely, the first image output mode, namely, the mode A) used by the Sensor. The IFE discards the frame N+1. Correspondingly, an old image frame, namely, the frame N, is displayed on the display. In other words, the frame N is displayed on the display within duration within which the frame N+1 is supposed to be displayed. From a perspective of a user, the user senses that the picture is lagging.

It is assumed that at a moment T5-1, after the Sensor completely writes the switching configuration information, the Sensor writes the effective configuration information into the effective register. At a moment T6-1, the Sensor obtains configuration information at an effective point 2. The Sensor detects that the effective configuration information is written into the effective register, and correspondingly, the Sensor performs image output on a frame N+2 based on new switching configuration information (namely, the second image output mode, namely, the Mode B).

The Sensor outputs the frame N+2 to the IFE. Current configuration information of the IFE is new image output mode configuration information, that is, indicates the second image output mode. Correspondingly, the IFE detects that an image output mode (namely, the second image output mode, namely, the modeB) of the IFE matches an image output mode (namely, the second image output mode, namely, the mode B) used by the Sensor. The IFE may further process the frame N+2 based on a preprocessing parameter (namely, configuration information) corresponding to the image output mode.

This application provides a photographing parameter setting method, to avoid a frame loss by delaying an effective point of configuration information of a frame N.

FIG. 9 is an example diagram of an image frame exposure time sequence. As shown in FIG. 9, before a moment T-1, a decision-making module makes a decision to switch a current first image output mode (namely, a mode A) to a second image output mode (mode B). Optionally, the decision-making module may make a decision on a frame in which image output mode switching is to be performed, or a Sensor node and an IFE node may make a decision on a frame in which image output mode switching is to be performed. This is not limited in this application.

With reference to FIG. 6B, the decision-making module outputs image output mode information to the Sensor node and the IFE node, to indicate to switch first image output mode configuration information to the second image output mode. A Sensor and an IFE are still configured to enable configuration information of a frame N to take effect in a frame N+1.

As shown in FIG. 9, in this example, an objective of this solution is to extend a frame length of the frame N, which is specifically extending duration of vblank (exposure duration remains unchanged), thereby delaying the effective point. As described above, a configuration of the Sensor takes effect in the frame N+1. Therefore, if the frame length of the frame N needs to be extended, in other words, a new frame length parameter takes effect in the frame N, correspondingly, the Sensor needs to write a new frame length in a frame N-1, to obtain a new frame length before the effective point (namely, a moment T4-1, which may also be understood as an exposure start point) of the frame N, so that the Sensor performs exposure and image output on the frame N based on the new frame length.

For this purpose, at a moment T1-1 (which may be any moment after the image output mode information of the decision-making module is received and before T2-1), the Sensor node determines, in response to an indication of the decision-making module, that an image output mode needs to be switched in the frame N. The Sensor node generates configuration information of the frame N-1. The configuration information of the frame N-1 includes but is not limited to a camera parameter. A frame length in the camera parameter is a second frame length. A current default frame length is a first frame length, for example, 33 ms, and may be set according to an actual requirement. This is not limited in this application.

Optionally, the second frame length is set to first frame length*Ratio (ratio). The first frame length is a default frame length, and is usually set to 33 ms. The Sensor node may determine a value of Ratio based on a product, a component, and a valued configured for a switching scenario. In this embodiment of this application, the value of Ratio is usually greater than 1 and less than 2. In other words, as shown in FIG. 9, extension duration (namely, moments T7-T8) of the frame N is less than the original frame length (namely, the first frame length) of the frame N (namely, moments T5~T7).

Optionally, because an image output manner of the frame N-1 remains unchanged, as shown in FIG. 6A, the IFE node does not need to deliver image output mode configuration information in the frame N-1. It should be noted that all configuration information other than the frame length and the image output mode configuration information is implemented based on a procedure of the conventional technology. Details are not described again in this application.

For example, as shown in FIG. 6A, the Sensor node delivers the configuration information of the frame N-1 to a CRM. The CRM obtains the Sensor configuration information (including the second frame length) of the frame N-1.

The moment T2-1 is an effective point of the frame N-1. The Sensor still exposes the frame N-1 based on the configuration information such as the first frame length. For example, the Sensor performs image output on the frame N-1 based on the Sensor image output configuration information at a moment T3. Actual image output duration is moments T3~T4, namely, an SOF to an EOF of the frame N. In this embodiment of this application, duration (namely, the moments T3-T4) of the frame N-1 is referred to as image output duration of the frame N.

The Sensor node generates the configuration information of the frame N at a moment T3-1 (which may be after the Sensor delivers the Sensor configuration information of the frame N-1 and before a moment T5 (namely, the frame N), and is not limited in this application). As described above, the Sensor node has obtained the image output mode of the frame N from the decision-making module, and has switched to the second image output mode. Correspondingly, the configuration information of the frame N includes the image output mode configuration information, and the image output mode configuration information includes but is not limited to switching configuration information and effective configuration information. The switching configuration information is used to indicate the Sensor to switch to the second image output mode (namely, the mode B). In addition, a frame length of the frame N+1 is expected to be restored to the first frame length. Correspondingly, the frame length in the camera parameter in the configuration information of the frame N is the first frame length.

The Sensor node delivers the Sensor configuration information of the frame N to the CRM. For a specific delivery procedure, refer to FIG. 6B. Details are not described herein again.

For example, the IFE node also generates the IFE configuration information of the frame N. The IFE configuration information includes but is not limited to a preprocessing parameter, or the like required for the second image output mode.

The IFE node delivers the IFE configuration information of the frame N to the CRM.

The CRM obtains the Sensor configuration information and the IFE configuration information of the frame N.

It should be noted that there may be a delay between generation and delivery of the configuration information. This is not limited in this application. Optionally, there may also be a delay between delivery of configuration information of the IFE node and delivery of configuration information of the Sensor node. This is not limited in this application.

The CRM delivers the configuration information (including the second frame length) of the frame N-1 to a Sensor driver at a moment T3-2 (which may be any moment between an SOF (namely, the T3 moment) of the frame N-1 to exposure (namely, the moment T4-1) of the frame N, and is not limited in this application). The Sensor driver writes the configuration information of the frame N-1 to a register corresponding to the Sensor.

At the moment T4-1, namely, the effective point of the frame N, in this example, which is an exposure start point of the frame N, the Sensor configuration information of the frame N-1 takes effect. In other words, the Sensor exposes the frame N based on the configuration information (including the second frame length and the first image output mode information) of the written frame N-1. The frame length of the frame N is the second frame length, namely, moments T5~T8. The image output mode of the frame N is the first image output mode, namely, the mode A.

The Sensor node generates the Sensor configuration information of the frame N+1 at a moment T5-1 (which may be any moment after the Sensor node delivers the configuration information of the frame N and before the frame N+1, and is not limited in this application). Because the decision-making module does not indicate to switch the image output mode in the frame N+1, correspondingly, the Sensor configuration information of the frame N+1 includes but is not limited to a camera parameter, but does not include image output mode configuration information. A frame length in the camera parameter of the frame N+1 is the first frame length.

For example, the Sensor node delivers the Sensor configuration information of the frame N+1 to the CRM. The CRM obtains the Sensor configuration information of the frame N+1. For a specific transmission procedure, refer to FIG. 6A. Details are not described herein again.

At a moment T5-2 (which may be any moment before a moment T6-1), the CRM delivers, to the Sensor driver, the Sensor configuration information that is of the frame N and that is obtained at the moment T3-1, and delivers the IFE configuration information of the frame N to an IFE driver. The Sensor configuration information includes but is not limited to a camera parameter (the frame length is the first frame length) and image output mode configuration information. The image output mode configuration information includes but is not limited to switching configuration information and effective configuration information. The switching configuration information indicates that the image output mode is the second image output mode (namely, the mode B).

After the Sensor driver writes all switching configuration information into the corresponding register, the Sensor writes the effective configuration information into an effective register. In addition, the IFE driver writes the IFE configuration information of the frame N into a corresponding register.

For example, as described above, the Sensor is configured with effective point information to indicate a location of an effective point in a frame. In this embodiment of this application, the effective point and an SOF of an image frame are separated by duration X. As shown in FIG. 9, because the frame length of the frame N is the second frame length in which an extension frame length is added, an original effective point (namely, the moment T6-1) of the frame N+1 moves backward, and an actual effective point (namely, a moment T7-1) of the frame N+1 and the original effective point (namely, the moment T6-1) are separated by "extension duration". In addition, the effective point (namely, the moment T7-1) of the frame N+1 and an SOF of the frame N+1 are separated by the duration X.

Still as shown in FIG. 9, at the moment T7-1, namely, the effective point of the frame N+1, which may be understood as an exposure start point of the frame N+1, the Sensor detects that the effective configuration information is written into the effective register, in other words, the configuration information of the frame N is completely written. The Sensor performs exposure and image output on the frame N+1 based on the Sensor configuration information of the frame N. To be specific, the frame length of the frame N+1 is the first frame length, and the image output mode is the second image output mode (namely, the mode B).

The Sensor outputs the image frame to the IFE. The IFE also enables the IFE configuration information of the frame N to take effect in the frame N+1. To be specific, the IFE processes, based on the preprocessing parameter corresponding to the second image output mode, an image collected by the Sensor based on the second image output mode.

In this way, as shown in FIG. 9, even if the Sensor writes the configuration information for a long time (for example, a time point at which writing into the effective register is performed has passed the original effective point), because the effective point of the frame N+1 is delayed, the Sensor has enough time to write the configuration information, that is, may complete writing of the configuration information of the frame N before the effective point of the frame N+1. Further, the Sensor can collect an image frame based on the new image output mode in the frame N+1 in a timely manner.

In a possible implementation, if the Sensor node predicts, based on factors such as a length of the Sensor configuration information and a capability of a component, that duration in which the Sensor writes the configuration information may not go beyond the original effective point. In this example, the Sensor node may also configure Ratio to 1. In other words, the Sensor still performs exposure and image output on the frame N based on first duration.

An embodiment of this application further provides another photographing parameter setting manner. In this manner, a Sensor is configured to enable configuration information of a frame N to take effect in a frame N+2. An IFE still enables the configuration information of the frame N to take effect in a frame N+1. Correspondingly, a CRM performs data synchronization based on an effective time sequence of the frame N+1 of the IFE and an effective time sequence of the frame N+2 of the Sensor. To be specific, the CRM delivers Sensor configuration information of the frame N to a Sensor driver in the frame N, so that the Sensor writes the Sensor configuration information of the frame N in the frame N, and enables the Sensor configuration information to take effect in the frame N+2. That is, the CRM delivers effective configuration information to the CRM in the frame N+2. In addition, the CRM delivers IFE configuration information of the frame N to an IFE driver in the frame N+1, so that the IFE writes the IFE configuration information of the frame N in the frame N+1, and enables the IFE configuration information to take effect in the frame N+2. In this way, in a scenario in which the Sensor writes the Sensor configuration information of the frame N in the frame N, the Sensor may complete writing of the Sensor configuration information before an effective point of the frame N+1, or may complete writing of the Sensor configuration information before an effective point of the frame N+2. In this application, effective configuration information of the Sensor is written in the frame N+1, to ensure that the IFE configuration information and the Sensor configuration information are synchronized in the frame N+2, in other words, switching to a second image output mode may be correctly performed in the frame N+2.

The following describes the foregoing manner in detail with reference to FIG. 10. FIG. 10 is an example diagram of an image frame exposure time sequence. As shown in FIG. 10, a decision-making module makes, based on scene environment information at a moment T1-1 (which may be any moment before a moment T3, and is not limited in this application), a decision on switching a first image output mode to a second image output mode. With reference to FIG. 6B, the decision-making module indicates the second image output mode to an IFE node and a Sensor node, to trigger the IFE node and the Sensor node to generate corresponding configuration information.

The Sensor node generates Sensor configuration information of a frame N in response to an indication of the decision-making module. The Sensor configuration information includes but is not limited to a camera parameter and image output mode configuration information. The camera parameter includes but is not limited to a frame length (for example, a first frame length) of the frame N. Sensor image output mode configuration information includes but is not limited to switching configuration information and effective configuration information. The switching configuration information includes a configuration parameter corresponding to the second image output mode.

The IFE node generates IFE configuration information of the frame N in response to an indication of the decision-making module. The IFE configuration information includes but is not limited to a preprocessing parameter corresponding to the second image output mode, so that an IFE can preprocess a preview stream collected by a target camera based on a target image output mode (namely, the second image output mode).

The Sensor node delivers the Sensor configuration information of the frame N to the CRM, and the IFE node delivers the IFE configuration information of the frame N to the CRM. The CRM obtains the Sensor configuration information and the IFE configuration information of the frame N. For a specific data transmission flow, refer to FIG. 6B. Details are not described herein again.

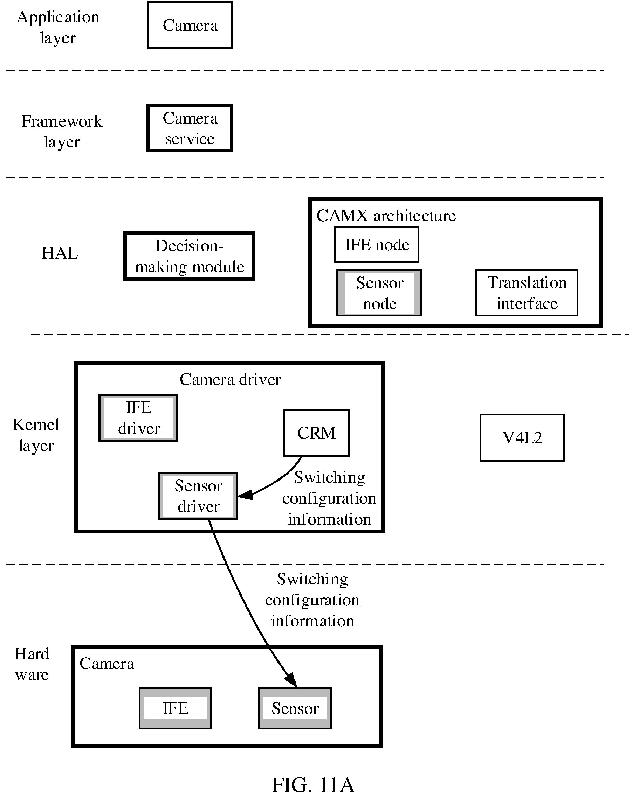

For example, as described above, the CRM controls a delivery occasion of the switching configuration information and the effective configuration information of the Sensor and the IFE configuration information based on a time sequence in which a Sensor enables configuration information of the frame N to take effect in a frame N+2 and a time sequence in which the IFE enables configuration information of the frame N to take effect in a frame N+1, to implement data synchronization between the IFE configuration information and the Sensor configuration information in the frame N+2. Correspondingly, in the example shown in FIG. 10, at a moment T3-1 (which may be any moment in the frame N, and is not limited in this application), as shown in FIG. 11A, the CRM outputs configuration information other than the effective configuration information to a Sensor driver, for example, including switching configuration information and a camera parameter (for example, a frame length).

Still as shown in FIG. 10, the Sensor exposes the frame N at a moment T2-1, and performs image output on the frame N at a moment T3. The frame N is exposed based on configuration information of a frame N-1. For example, the frame length of the frame N is the first frame length, and an image output mode is the first image output mode (namely, a Mode A). At a moment T3-1 (which may be any moment after an SOF of the frame N and before an effective point of the frame N+1, and is not limited in this application), the Sensor driver writes the Sensor configuration information of the frame N into an image output mode register corresponding to the Sensor, so that the Sensor performs image output based on a specified image output mode (namely, the second image output mode). For example, the Sensor configuration information includes but is not limited to a camera parameter and switching configuration information. The camera parameter includes but is not limited to the frame length (for example, a first frame length) of the frame N.

At a moment T4-1, the Sensor determines, based on effective point configuration information (for example, an effective point and the SOF of the frame N are separated by duration X), that the time point is an effective point of the frame N+1, and in this example, is an exposure start point of the frame N+1. The effective configuration information of the frame N is not written into a corresponding register. In other words, the Sensor does not obtain the effective configuration information of the frame N. Therefore, the Sensor still performs image output based on old configuration information. That is, the frame length of the frame N is the first frame length, and the image output mode of the frame N is the first image output mode, namely, the mode A.

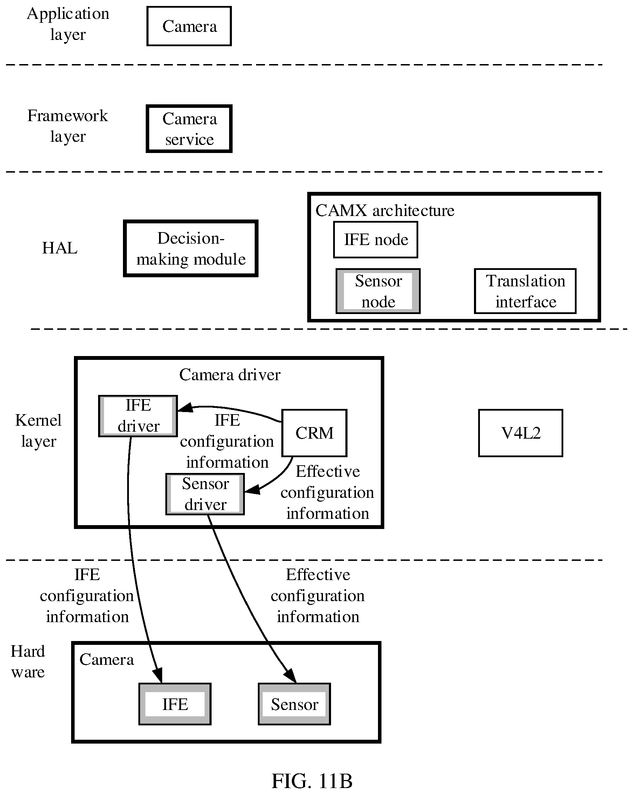

At a moment T5-1 (which may be any moment before a moment T6-1, namely, an effective point of the frame N+2, and is not limited in this application), as shown in FIG. 11B, the CRM delivers the effective configuration information of the frame N to the Sensor driver, and the Sensor driver writes the effective configuration information of the frame N into an effective register of the Sensor.

For example, at the moment T5-1 (which may be any moment before the moment T6-1, namely, the effective point of the frame N+2, and is not limited in this application), the CRM delivers the IFE configuration information of the frame N to an IFE driver, and the IFE driver writes the IFE configuration information of the frame N into a register of the IFE.

Optionally, a time at which the CRM delivers the IFE configuration information of the frame N to the IFE driver may be different from a time at which the CRM delivers the effective configuration information of the frame N to the Sensor driver. This is not limited in this application.

At the moment T6-1, the Sensor determines, based on effective point configuration information (for example, an effective point and an SOF of the frame N+1 are separated by duration X), that the time point is an effective point of the frame N+2, and in this example, is an exposure start point of the frame N+2. As described above, before this moment, the Sensor has written the effective configuration information. Correspondingly, at the effective point, the Sensor may perform image output based on the written configuration information (including the second image output mode, the first frame length, and the like) of the frame N, that is, perform exposure and image output on the frame N+2. That is, an image output mode of the frame N+2 is the second image output mode, namely, the mode B.

For example, the Sensor outputs the frame N+2 to the IFE. As described above, an effective time sequence for the IFE is the frame N+1. Therefore, the IFE writes the IFE configuration information into the frame N+1, and the IFE configuration information takes effect in the frame N+2. Correspondingly, the IFE processes the frame N+1 based on the IFE configuration information of the frame N. For example, the IFE performs image processing on the frame N+1 based on the preprocessing parameter corresponding to the second image output mode.

The IFE outputs a processed image to a camera application, and the camera application displays the frame N+2. A display effect of the frame N+2 is different from a display effect of an image frame such as the frame N+1 or the frame N because of image output mode switching.

For example, as described above, an effective point of a camera parameter may be different from an effective point of an image output configuration. The following describes this scenario in detail with reference to FIG. 7, FIG. 9, and FIG. 10. With reference to FIG. 7, FIG. 12 is an example diagram of an image frame exposure time sequence. As shown in FIG. 12, at a moment T1-1 (which may be any moment before a frame N, and is not limited in this application), a Sensor node delivers Sensor configuration information (including image output mode configuration information corresponding to a second image output mode, a camera parameter, and the like) of the frame N to a CRM, and an IFE node delivers IFE configuration information of the frame N to the CRM. The CRM obtains the Sensor configuration information and the IFE configuration information that correspond to the frame N (for a specific data stream, refer to FIG. 6B, and details are not described herein again). Optionally, as described above, the camera parameter and the image output configuration information in the Sensor configuration information may be delivered to the CRM at different times. For a specific delivery procedure, refer to embodiments of the conventional technology. This is not limited in this application.

In this scenario, a camera parameter effective point is different from an image output configuration effective point. The camera parameter effective point is an exposure duration start point (which may be any moment after an EOF of a frame N-1 and before an exposure start point, and is not limited in this application). To be specific, at a moment T2-1, a Sensor exposes the frame N-1 based on the camera parameter (for example, a frame length).

At a moment T2-2 (which may be any moment after the EOF of the frame N-1 and before an SOF of the frame N, and is not limited in this application), the Sensor detects, based on effective point information, whether the Sensor image output configuration information is received at this moment. Image output mode configuration information in current configuration information of the Sensor indicates a first image output mode, namely, a mode A. Correspondingly, the Sensor performs image output on the frame N based on the first image output mode at a moment T3.

The configuration information of the frame N is written in the frame N, and takes effect in a frame N+1. Specifically, the CRM may send the Sensor configuration information (including the camera parameter and the image output mode configuration information corresponding to the second image output mode) corresponding to the frame N to a Sensor driver at a moment T3-1 (which is usually any moment between the SOR and the EOF, may be set according to an actual requirement, and is not limited in this application) in the frame N, and the CRM sends the IFE configuration information (including the image output mode configuration information (the image output mode configuration information indicates the second image output mode)) corresponding to the frame N to an IFE driver.

The Sensor driver and the IFE driver respectively write corresponding configuration information to the Sensor and the IFE at the moment T3-1. It should be noted that there may be a delay between the foregoing two write actions. This is not limited in this application.

In this embodiment of this application, as described above, the image output mode configuration information of the Sensor may further include the switching configuration information and the effective configuration information. For example, the Sensor driver writes the switching configuration information into a register (denoted as an image output mode register) corresponding to the Sensor. After the Sensor driver writes all switching configuration information into the register, the Sensor writes the effective configuration information into a corresponding register (denoted as an effective register). For a writing manner of other configuration information (for example, the camera parameter), refer to the conventional technology. This is not limited in this application.

For example, the IFE driver writes the IFE configuration information of the frame N into a register corresponding to the IFE.

Optionally, a quantity of registers into which the IFE performs writing is less than a quantity of registers into which the Sensor needs to perform writing. Usually, the configuration information of the Sensor is long, and needs to be written into a large quantity of registers.

The Sensor exposes the frame N based on the camera parameter (for example, the frame length) at a moment T4-1. At a moment T4-2 (which may be any moment after the EOF of the frame N and before an SOF of the frame N+1, and is not limited in this application), the Sensor detects, based on effective point information, whether the Sensor image output configuration information is received at this moment. In this example, the Sensor has obtained the Sensor image output configuration information. In other words, the Sensor image output configuration information of the frame N takes effect at this point. Correspondingly, the Sensor performs image output on the frame N based on the second image output mode at a moment T5.

For other parts not described, refer to related descriptions in FIG. 7 and FIG. 8. Details are not described herein again.

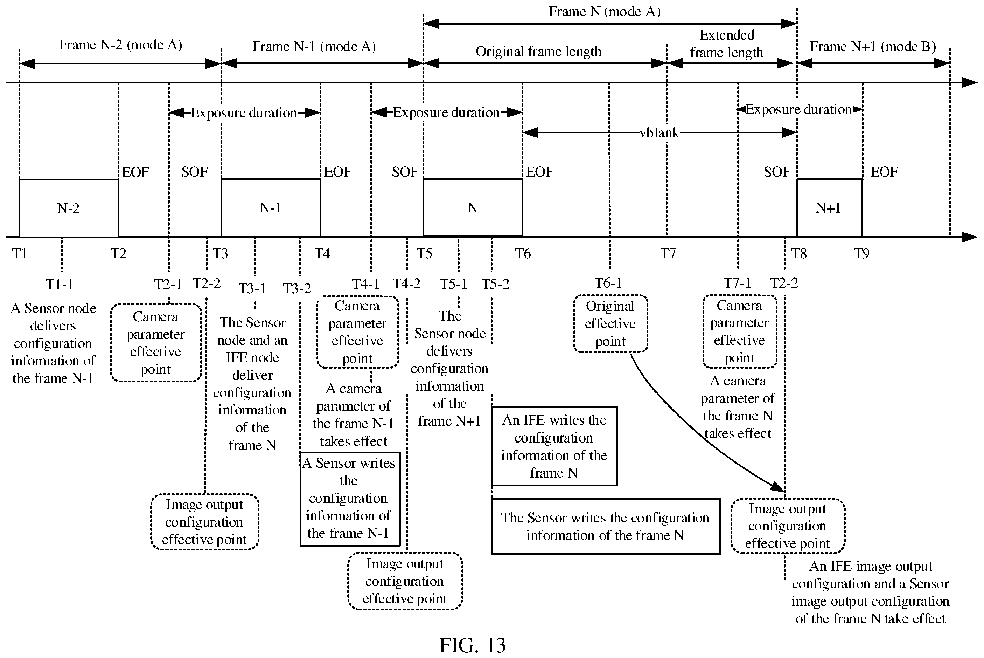

With reference to FIG. 9, FIG. 13 is an example diagram of an image frame exposure time sequence. As shown in FIG. 13,
at a moment T1-1 (which may be any moment after image output mode information of a decision-making module is received and before T2-1), a Sensor node determines, in response to an indication of the decision-making module, that an image output mode needs to be switched in a frame N. The Sensor node generates configuration information of a frame N-1. The configuration information of the frame N-1 includes but is not limited to a camera parameter. A frame length in the camera parameter is a second frame length. A current default frame length is a first frame length, for example, 33 ms, and may be set according to an actual requirement. This is not limited in this application. The Sensor node delivers the configuration information of the frame N-1 to a CRM. The CRM obtains the Sensor configuration information (including the second frame length) of the frame N-1.

At the moment T2-1, namely, a camera parameter effective point, the Sensor exposes the frame N-1 based on a camera parameter of a frame N-2. At a moment T2-2, namely, an image output configuration effective point, the Sensor detects whether image output configuration information is received, and the Sensor still enables old image output configuration information to take effect. Correspondingly, the Sensor performs image output on the frame N-1 based on a first image output mode at a moment T3.

The Sensor node generates configuration information of the frame N at a moment T3-1 (which may be after the Sensor delivers the Sensor configuration information of the frame N-1 and before a moment T5 (namely, the frame N), and is not limited in this application). As described above, the Sensor node has obtained an image output mode of the frame N from the decision-making module, and has switched to a second image output mode. Correspondingly, the configuration information of the frame N includes image output mode configuration information, and the image output mode configuration information includes but is not limited to switching configuration information and effective configuration information. The switching configuration information is used to indicate the Sensor to switch to the second image output mode (namely, a mode B). In addition, a frame length of a frame N+1 is expected to be restored to the first frame length. Correspondingly, a frame length in a camera parameter in the configuration information of the frame N is the first frame length.

The Sensor node delivers the Sensor configuration information of the frame N to the CRM. For a specific delivery procedure, refer to FIG. 6B. Details are not described herein again.

For example, the IFE node also generates IFE configuration information of the frame N. The IFE configuration information includes but is not limited to a preprocessing parameter, or the like required for the second image output mode.

The IFE node delivers the IFE configuration information of the frame N to the CRM.

The CRM obtains the Sensor configuration information and the IFE configuration information of the frame N.

The CRM delivers the configuration information (including the second frame length) of the frame N-1 to a Sensor driver at a moment T3-2 (which may be any moment between an SOF (namely, the T3 moment) of the frame N-1 to exposure (namely, a moment T4-1) of the frame N, and is not limited in this application). The Sensor driver writes the configuration information of the frame N-1 to a register corresponding to the Sensor.

At the moment T4-1, namely, a camera parameter effective point of the frame N, the Sensor exposes the frame N based on the camera parameter (namely, the second frame length) of the frame N-1. At a moment T4-2, namely, an image output configuration effective point, the Sensor detects whether image output configuration information is received, and the Sensor still enables old image output configuration information to take effect. Correspondingly, the Sensor performs image output on the frame N based on a first image output mode at a moment T5.

At a moment T5-2 (which may be any moment before a moment T6-1), the CRM delivers, to the Sensor driver, the Sensor configuration information that is of the frame N and that is obtained at the moment T3-1, and delivers the IFE configuration information of the frame N to an IFE driver. The Sensor configuration information includes but is not limited to a camera parameter (the frame length is the first frame length) and image output mode configuration information. The image output mode configuration information includes but is not limited to switching configuration information and effective configuration information. The switching configuration information indicates that the image output mode is the second image output mode (namely, the mode B).

After the Sensor driver writes all switching configuration information into the corresponding register, the Sensor writes the effective configuration information into an effective register. In addition, the IFE driver writes the IFE configuration information of the frame N into a corresponding register.

At a moment T7-1, namely, a camera parameter effective point of the frame N+1, the Sensor exposes the frame N+1 based on the camera parameter (namely, the first frame length) of the frame N. At a moment T7-2, namely, an image output configuration effective point, the Sensor detects whether image output configuration information is received, and the Sensor has received the image output configuration information of the frame N (namely, the second image output mode). Correspondingly, the Sensor performs image output on the frame N+1 based on the second image output mode at a moment T8. The Sensor outputs the image frame to the IFE. The IFE also enables the IFE configuration information of the frame N to take effect in the frame N+1. To be specific, the IFE processes, based on the preprocessing parameter corresponding to the second image output mode, an image collected by the Sensor based on the second image output mode. For other parts not described, refer to FIG. 9. Details are not described herein again.

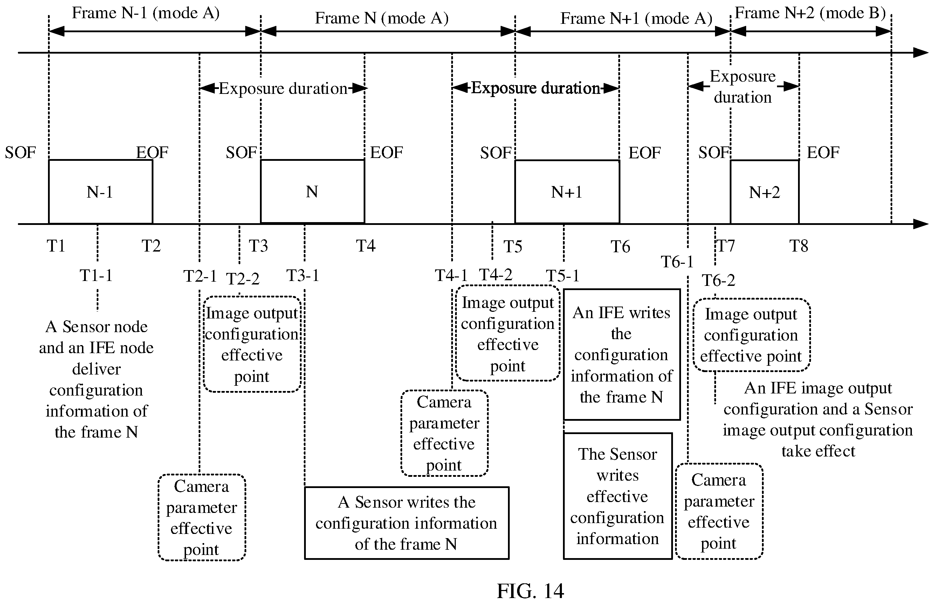

With reference to FIG. 10, FIG. 14 is an example diagram of an image frame exposure time sequence. As shown in FIG. 14, a decision-making module makes, based on scene environment information at a moment T1-1 (which may be any moment before a moment T3, and is not limited in this application), a decision to switch a first image output mode to a second image output mode. With reference to FIG. 6B, the decision-making module indicates the second image output mode to an IFE node and a Sensor node, to trigger the IFE node and the Sensor node to generate corresponding configuration information.

The Sensor node generates Sensor configuration information of a frame N in response to an indication of the decision-making module. The Sensor configuration information includes but is not limited to a camera parameter and image output mode configuration information. The camera parameter includes but is not limited to the frame length (for example, a first frame length) of the frame N. Sensor image output mode configuration information includes but is not limited to switching configuration information and effective configuration information. The switching configuration information includes a configuration parameter corresponding to the second image output mode.

The IFE node generates IFE configuration information of the frame N in response to an indication of the decision-making module. The IFE configuration information includes but is not limited to a preprocessing parameter corresponding to the second image output mode, so that an IFE can preprocess a preview stream collected by a target camera based on a target image output mode (namely, the second image output mode).

The Sensor node delivers the Sensor configuration information of the frame N to the CRM, and the IFE node delivers the IFE configuration information of the frame N to the CRM. The CRM obtains the Sensor configuration information and the IFE configuration information of the frame N. For a specific data transmission flow, refer to FIG. 6B. Details are not described herein again.

For example, as described above, the CRM controls a delivery occasion of the switching configuration information and the effective configuration information of a Sensor and the IFE configuration information based on a time sequence in which a Sensor enables configuration information of the frame N to take effect in a frame N+2 and a time sequence in which the IFE enables configuration information of the frame N to take effect in a frame N+1, to implement data synchronization between the IFE configuration information and the Sensor configuration information in the frame N+2.

The Sensor exposes the frame N based on a camera parameter (for example, a frame length) of a frame N-2 at a moment T2-1. Optionally, a camera parameter effective time sequence may be the frame N+1. In other words, a camera parameter of the frame N still takes effect in the frame N+1. This is not limited in this application.

At a moment T2-2 (which may be any moment after an EOF of the frame N and before an SOF of the frame N, and is not limited in this application), the Sensor detects, based on effective point information, whether the Sensor image output configuration information is received at this moment. Image output mode configuration information in current configuration information of the Sensor indicates a first image output mode, namely, a mode A. Correspondingly, the Sensor performs image output on the frame N based on the first image output mode at a moment T3.

At a moment T3-1 (which may be any moment after an SOF of the frame N and before an effective point of the frame N+1, and is not limited in this application), the Sensor driver writes the Sensor configuration information of the frame N into an image output mode register corresponding to the Sensor, so that the Sensor performs image output based on a specified image output mode (namely, the second image output mode). For example, the Sensor configuration information includes but is not limited to a camera parameter and switching configuration information. The camera parameter includes but is not limited to the frame length (for example, a first frame length) of the frame N.

The Sensor exposes the frame N+1 based on a camera parameter (for example, a frame length) of the frame N-1 at a moment T4-1.

At a moment T4-2 (which may be any moment after the EOF of the frame N and before an SOF of the frame N+1, and is not limited in this application), the Sensor detects, based on effective point information, whether the Sensor image output configuration information is received at this moment. Image output mode configuration information in current configuration information of the Sensor indicates a first image output mode, namely, a mode A. Correspondingly, the Sensor performs image output on the frame N+1 based on the first image output mode at a moment T5.

At a moment T5-1 (which may be any moment before a moment T6-1, namely, an effective point of the frame N+2, and is not limited in this application), as shown in FIG. 11B, the CRM delivers the effective configuration information of the frame N to the Sensor driver, and the Sensor driver writes the effective configuration information of the frame N into an effective register of the Sensor.

The Sensor exposes the frame N+2 based on a camera parameter (for example, a frame length) of a frame N at a moment T6-1.

At a moment T6-2 (which may be any moment after the EOF of the frame N+1 and before an SOF of the frame N+2, and is not limited in this application), the Sensor detects, based on effective point information, whether the Sensor image output configuration information is received at this moment. At a moment T6-2, namely, an image output configuration effective point, the Sensor detects whether image output configuration information is received, and the Sensor has received the image output configuration information of the frame N (namely, the second image output mode). Correspondingly, the Sensor performs image output on the frame N+2 based on the second image output mode at a moment T7. The Sensor outputs the image frame to the IFE. The IFE enables the IFE configuration information of the frame N to take effect in the frame N+1. To be specific, the IFE processes, based on the preprocessing parameter corresponding to the second image output mode, an image collected by the Sensor based on the second image output mode. For other parts not described, refer to FIG. 10. Details are not described herein again.

It may be understood that to implement the foregoing functions, the electronic device includes corresponding hardware and/or software modules for performing the functions. Algorithm steps in the examples described with reference to the embodiments disclosed in this specification can be implemented by hardware or a combination of hardware and computer software in this application. Whether a specific function is performed by hardware or hardware driven by computer software depends on a particular application and a design constraint of the technical solutions. A person skilled in the art may use different methods to implement the described functions with reference to embodiments for each particular application, but it should not be considered that the implementation goes beyond the scope of this application.

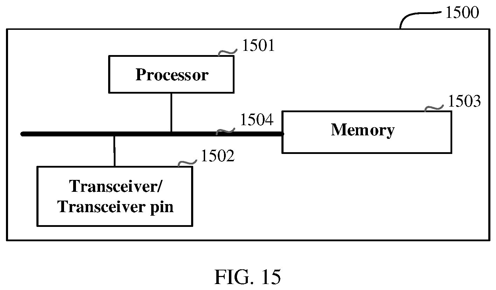

In an example, FIG. 15 is a schematic block diagram of an apparatus 1500 according to an embodiment of this application. The apparatus 1500 may include a processor 1501 and a transceiver/transceiver pin 1502. Optionally, a memory 1503 is further included.

Components in the apparatus 1500 are coupled together through a bus 1504. In addition to a data bus, the bus 1504 further includes a power bus, a control bus, and a status signal bus. However, for clarity of description, various buses are referred to as the bus 1504 in the figure.

Optionally, the memory 1503 may be used for instructions in the foregoing method embodiments. The processor 1501 may be configured to: execute the instructions in the memory 1503, control a receive pin to receive a signal, and control a transmit pin to send a signal.

The apparatus 1500 may be the electronic device or a chip in the electronic device in the foregoing method embodiments.

All related content of each step in the foregoing method embodiment may be cited to a function description of a corresponding functional module, and details are not described herein again.

An embodiment further provides a computer storage medium. The computer storage medium stores computer instructions. When the computer instructions are run on an electronic device, the electronic device is enabled to perform the foregoing related method steps to implement the method in the foregoing embodiments.

An embodiment further provides a computer program product. When the computer program product runs on a computer, the computer is enabled to perform the foregoing related steps to implement the method in the foregoing embodiments.

In addition, an embodiment of this application further provides an apparatus. The apparatus may be specifically a chip, a component, or a module. The apparatus may include a processor and a memory that are connected to each other. The memory is configured to store computer-executable instructions. When the apparatus runs, the processor may execute the computer-executable instructions stored in the memory, so that the chip performs the method in the foregoing method embodiments.

The electronic device, the computer storage medium, the computer program product, or the chip provided in the embodiments is configured to perform the corresponding method provided above. Therefore, for beneficial effects that can be achieved by the electronic device, the computer storage medium, the computer program product, or the chip, refer to the beneficial effects in the corresponding method provided above. Details are not described herein again.

The foregoing embodiments are merely intended to describe the technical solutions in this application, but not intended to limit this application. Although this application is described in detail with reference to the foregoing embodiments, persons of ordinary skill in the art should understand that they may still make modifications to the technical solutions described in the foregoing embodiments or make equivalent replacements to some technical features thereof. However, these modifications or replacements do not make the essence of the corresponding technical solutions depart from the scope of the technical solutions in the embodiments of this application.

## Claims

1. A photographing parameter setting method, applied to an electronic device, wherein the method comprises:
obtaining a first camera parameter of an (N-1)th frame at a first moment, wherein the first camera parameter comprises a first frame length;
obtaining second image output mode configuration information and a second camera parameter that are of an Nth frame at a second moment, wherein the second image output mode configuration information comprises a configuration parameter corresponding to a second image output mode, the second camera parameter comprises a second frame length, and the second frame length is less than the first frame length;
writing the first camera parameter into a camera sensor at a third moment;
performing, by the camera sensor, exposure and image output on the Nth frame based on the first camera parameter, wherein a frame length of the Nth frame is the first frame length, and an image output mode of the Nth frame is a first image output mode;
writing the second image output mode configuration information and the second camera parameter into the camera sensor at a fourth moment; and
performing, by the camera sensor, exposure and image output on an (N+1)th frame based on the second camera parameter and the second image output mode configuration information, wherein the fourth moment is within the Nth frame, a frame length of the (N+1)th frame is the second frame length, and an image output mode of the (N+1)th frame is the second image output mode.

2. The method according to claim 1, wherein duration between an image output mode effective point of the Nth frame and a start of frame delimiter SOF of the Nth frame is first duration, and duration between an image output mode effective point of the (N+1)th frame and an SOF of the (N+1)th frame is the first duration; and
the performing, by the camera sensor, exposure and image output on an (N+1)th frame based on the second camera parameter and the second image output mode configuration information comprises:
obtaining, by the camera sensor, the second image output mode configuration information at the image output mode effective point of the (N+1)th frame; and
performing, by the camera sensor, image output on the (N+1)th frame at the SOF of the (N+1)th frame.

3. The method according to claim 1, wherein before the writing the first camera parameter into a camera sensor, the method further comprises:
obtaining IFE configuration information of the Nth frame at a fifth moment, wherein the IFE configuration information comprises a preprocessing parameter corresponding to the second image output mode; and
the writing the second image output mode configuration information and the second camera parameter into the camera sensor further comprises:
writing the IFE configuration information into an IFE.

4. The method according to claim 3, wherein the method further comprises:
performing, by the IFE based on the IFE configuration information, image processing on the (N+1)th frame input by the camera sensor.

5. The method according to any one of claims 1 to 4, wherein the first frame length is n times the second frame length, and n is greater than or greater than or equal to 1 and less than 2.

6. A photographing parameter setting method, applied to an electronic device, wherein the method comprises:
obtaining second image output mode configuration information of an Nth frame and IFE configuration information of the Nth frame at a first moment, wherein the second image output mode configuration information comprises effective configuration information and a configuration parameter corresponding to a second image output mode, and the IFE configuration information comprises a preprocessing parameter corresponding to the second image output mode;
performing image output on the Nth frame at a second moment, wherein an image output mode of the Nth frame is a first image output mode;
writing the configuration parameter corresponding to the second image output mode into a camera sensor at a third moment, wherein the third moment is in the Nth frame;
performing image output on an (N+1)th frame at a fourth moment, wherein an image output mode of the (N+1)th frame is the first image output mode;
writing the effective configuration information into the camera sensor at a fifth moment within the (N+1)th frame, and writing the IFE configuration information into an IFE; and
performing, by the camera sensor, image output on an (N+2)th frame based on the second image output mode configuration information, wherein an image output mode of the (N+2)th frame is the second image output mode.

7. The method according to claim 6, wherein duration between an image output mode effective point of the (N+1)th frame and a start of frame delimiter SOF of the (N+1)th frame is first duration, and duration between an image output mode effective point of the (N+2)th frame and an SOF of the (N+2)th frame is the first duration; and
the performing, by the camera sensor, image output on an (N+2)th frame based on the second image output mode configuration information comprises:
obtaining, by the camera sensor, the second image output mode configuration information at the image output mode effective point of the (N+2)th frame; and
performing, by the camera sensor, image output on the (N+2)th frame at the SOF of the (N+2)th frame.

8. The method according to claim 7, wherein the fifth moment is before the image output mode effective point of the (N+2)th frame.

9. The method according to claim 6, wherein the method further comprises:
performing, by the IFE based on the IFE configuration information, image processing on the (N+2)th frame input by the camera sensor.

10. An electronic device, comprising:
one or more processors, a memory, and
one or more computer programs, wherein the one or more computer programs are stored in the memory, and when the computer programs are executed by the one or more processors, the electronic device is enabled to perform the following steps:
obtaining a first camera parameter of an (N-1)th frame at a first moment, wherein the first camera parameter comprises a first frame length;
obtaining second image output mode configuration information and a second camera parameter that are of an Nth frame at a second moment, wherein the second image output mode configuration information comprises a configuration parameter corresponding to a second image output mode, the second camera parameter comprises a second frame length, and the second frame length is less than the first frame length;
writing the first camera parameter into a camera sensor at a third moment;
performing, by the camera sensor, exposure and image output on the Nth frame based on the first camera parameter, wherein a frame length of the Nth frame is the first frame length, and an image output mode of the Nth frame is a first image output mode;
writing the second image output mode configuration information and the second camera parameter into the camera sensor at a fourth moment; and
performing, by the camera sensor, exposure and image output on an (N+1)th frame based on the second camera parameter and the second image output mode configuration information, wherein the fourth moment is within the Nth frame, a frame length of the (N+1)th frame is the second frame length, and an image output mode of the (N+1)th frame is the second image output mode.

11. The electronic device according to claim 10, wherein duration between an image output mode effective point of the Nth frame and a start of frame delimiter SOF of the Nth frame is first duration, duration between an image output mode effective point of the (N+1)th frame and an SOF of the (N+1)th frame is the first duration, and when the computer program is executed by the one or more processors, the electronic device is enabled to perform the following steps:
obtaining, by the camera sensor, the second image output mode configuration information at the image output mode effective point of the (N+1)th frame; and
performing, by the camera sensor, image output on the (N+1)th frame at the SOF of the (N+1)th frame.

12. The electronic device according to claim 10, wherein when the computer programs are executed by the one or more processors, the electronic device is enabled to perform the following step:
obtaining IFE configuration information of the Nth frame at a fifth moment, wherein the IFE configuration information comprises a preprocessing parameter corresponding to the second image output mode; and
when the computer programs are executed by the one or more processors, the electronic device is enabled to perform the following step:
writing the IFE configuration information into an IFE.

13. The electronic device according to claim 12, wherein when the computer programs are executed by the one or more processors, the electronic device is enabled to perform the following step:
performing, by the IFE based on the IFE configuration information, image processing on the (N+1)th frame input by the camera sensor.

14. The electronic device according to any one of claims 10 to 13, wherein the first frame length is n times the second frame length, and n is greater than or greater than or equal to 1 and less than 2.

15. An electronic device, comprising:
one or more processors, a memory, and
one or more computer programs, wherein the one or more computer programs are stored in the memory, and when the computer programs are executed by the one or more processors, the electronic device is enabled to perform the following steps:
obtaining second image output mode configuration information of an Nth frame and IFE configuration information of the Nth frame at a first moment, wherein the second image output mode configuration information comprises effective configuration information and a configuration parameter corresponding to a second image output mode, and the IFE configuration information comprises a preprocessing parameter corresponding to the second image output mode;
performing image output on the Nth frame at a second moment, wherein an image output mode of the Nth frame is a first image output mode;
writing the configuration parameter corresponding to the second image output mode into a camera sensor at a third moment, wherein the third moment is in the Nth frame;
performing image output on an (N+1)th frame at a fourth moment, wherein an image output mode of the (N+1)th frame is the first image output mode;
writing the effective configuration information into the camera sensor at a fifth moment within the (N+1)th frame, and writing the IFE configuration information into an IFE; and
performing, by the camera sensor, image output on an (N+2)th frame based on the second image output mode configuration information, wherein an image output mode of the (N+2)th frame is the second image output mode.

16. The electronic device according to claim 15, wherein duration between an image output mode effective point of the (N+1)th frame and a start of frame delimiter SOF of the (N+1)th frame is first duration, duration between an image output mode effective point of the (N+2)th frame and an SOF of the (N+2)th frame is the first duration, and when the computer program is executed by the one or more processors, the electronic device is enabled to perform the following steps:
obtaining, by the camera sensor, the second image output mode configuration information at the image output mode effective point of the (N+2)th frame; and
performing, by the camera sensor, image output on the (N+2)th frame at the SOF of the (N+2)th frame.

17. The electronic device according to claim 16, wherein the fifth moment is before the image output mode effective point of the (N+2)th frame.

18. The electronic device according to claim 15, wherein when the computer programs are executed by the one or more processors, the electronic device is enabled to perform the following step:
performing, by the IFE based on the IFE configuration information, image processing on the (N+2)th frame input by the camera sensor.

19. A computer storage medium, comprising computer instructions, wherein when the computer instructions are run on an electronic device, the electronic device is enabled to perform the method according to any one of claims 1-5 or the method according to any one of claims 6-9.

20. A computer program product, wherein when the computer program product is run on a computer, the computer is enabled to the method according to any one of claims 1-5 or the method according to any one of claims 6-9.

21. A chip, comprising one or more interface circuits and one or more processors, wherein the interface circuit is configured to: receive a signal from a memory of an electronic device, and send the signal to the processor, the signal comprises computer instructions stored in the memory, and when the processor executes the computer instructions, the electronic device is enabled to the method according to any one of claims 1-5 or the method according to any one of claims 6-9.
